# EUROPÄISCHE PATENTSCHRIFT

(11) **EP 4 400 237 B1**
(45) Veröffentlichungstag und Bekanntmachung des Hinweises auf die Patenterteilung: **04.02.2026**
(21) Anmeldenummer: 23216928.4
(22) Anmeldetag: 14.12.2023
(51) Int. Cl.: B23B 31/26

(54) **WERKZEUGSPINDEL, WERKZEUGEINHEIT UND WERKZEUGMASCHINE**
TOOL SPINDLE, TOOL UNIT AND MACHINE TOOL
BROCHE D'OUTIL, UNITÉ D'OUTIL ET MACHINE-OUTIL

(30) Priorität: 15.12.2022 DE 102022133522; 15.12.2022 DE 102022133527
(43) Veröffentlichungstag der Anmeldung: 17.07.2024
(73) Patentinhaber: CHIRON Group SE, 78532 Tuttlingen (DE)
(72) Erfinder: Efinger, Matthias, 78554 Aixheim (DE)
(74) Vertreter: Witte, Weller & Partner Patentanwälte mbB

(56) Entgegenhaltungen:
- EP-A1- 0 259 517
- EP-A1- 0 317 682
- EP-A1- 0 887 134

## Beschreibung

Die vorliegende Offenbarung betrifft gemäß einem ersten Aspekt eine Werkzeugspindel, insbesondere eine stehende Werkzeugspindel, für eine Werkzeugmaschine zur Aufnahme einer Werkzeugeinheit. Gemäß einem weiteren Aspekt betrifft die vorliegende Offenbarung eine Werkzeugeinheit für eine Werkzeugspindel einer Werkzeugmaschine, insbesondere eine stehende Werkzeugspindel. Ferner bezieht sich die vorliegende Offenbarung auf Werkzeugmaschinen, die mit solchen Werkzeugspindeln und/oder Werkzeugeinheiten bestückbar oder bestückt sind. Gemäß weiteren Aspekten bezieht sich die vorliegende Offenbarung auf Kombinationen aus Werkzeugspindel und Werkzeugeinheit, die für spezifische Bearbeitungszwecke geeignet sind. Gemäß weiteren Aspekten bezieht sich die vorliegende Offenbarung auf Verfahren zum Betrieb einer Werkzeugmaschine.

Die vorliegende Offenbarung bezieht sich allgemein auf Werkzeugmaschinen mit Werkzeugspindeln, die bedarfsweise zur Aufnahme von angetriebenen Werkzeugen (beispielsweise Bohrer, Fräser und dergleichen) sowie von stehenden Werkzeugen (beispielsweise Drehwerkzeuge zur Bearbeitung rotierender Werkstücke) ausgebildet sind. Mit derartigen Werkzeugspindeln können verschiedene Bearbeitungen durchgeführt werden. In beispielhaften Ausgestaltungen bezieht sich die vorliegende Offenbarung auf Gestaltungen von Werkzeugspindeln und hierfür geeigneten Werkzeugeinheiten, die als sogenannte Überkopfspindeln bzw. stehende Werkzeugspindeln nutzbar sind. Derartige Werkzeugspindeln sind zumindest zeitweise unterhalb eines Werkstücks angeordnet und regelmäßig zumindest zeitweise vertikal orientiert. Wenn ein Werkstück mit einer solchen Werkzeugspindel bearbeitet wird, muss der Spänefall bzw. der Eintrag von Abrieb, KSS-Fluiden (Prozessfluide) und ähnlichem berücksichtigt werden. Bei hängenden Werkzeugspindel trägt die Schwerkraft dazu bei, dass Späne, Abrieb und Prozessfluide die Werkzeugspindel nicht übermäßig verschmutzen. Bei Überkopfspindeln bzw. stehenden Werkzeugspindeln muss mit stärkerem Verschmutzungseintrag gerechnet werden.

Beispielsweise eignen sich die Werkzeugspindel und die Werkzeugeinheit für sogenannte kombinierte Bearbeitungsmaschinen. Kombinierte Werkzeugmaschinen sind beispielhaft als Dreh- und Fräsmaschine (bzw. als Dreh- und Fräs-Bearbeitungszentrums mit horizontal orientierter Werkstückspindel ausgebildet.

Aus der EP 1 180 412 A2 ist eine kombinierte Bearbeitungsmaschine mit einem Schrägbett-Maschinengestell bekannt, mit einer ersten Werkstückspindel und einer dieser gegenüberliegenden zweiten Werkstückspindel, wobei die erste Werkstückspindel und die zweite Werkstückspindel entlang einer horizontalen Werkstückachse rotierbar sind, mit einer oberen Bearbeitungseinheit, die entlang zweier translatorischer Achsen verfahrbar und um eine Schwenkachse verschwenkbar ist, und mit einer unteren Bearbeitungseinheit, die entlang zweier translatorischer Achsen verfahrbar ist und einen Werkzeugrevolver mit mehreren Bearbeitungswerkzeugen trägt.

Kombinierte Werkzeugmaschinen eignen sich für komplexe Bearbeitungen, beispielsweise für eine kombinierte Dreh- und Fräsbearbeitung. Solche Werkzeugmaschinen können sich ferner für die Bearbeitung von Stangenmaterial, von Futterteilen und dergleichen, generell für die Bearbeitung von Werkstücken mit einer Rotationsachse eignen. Dies ist nicht einschränkend zu verstehen.

Aus der DE 10 2006 046 502 A1 sind sogenannte Winkelköpfe bekannt, die eine geneigte Orientierung eines angetriebenen Bearbeitungswerkzeugs in Bezug auf eine Längsachse einer Werkzeugspindel bereitstellen. Beispielhaft ist ein solches Bearbeitungswerkzeug mit seiner Rotationsachse rechtwinklig zur Längsachse der Werkzeugspindel orientiert. Das Bearbeitungswerkzeug ist antreibbar. Der Winkelkopf als solches kann um die Längsachse der Werkzeugspindel rotiert werden, um das Bearbeitungswerkzeug in einer gewünschten Drehorientierung zu positionieren. Die Antriebsbewegung und die Positionierbewegung werden durch die Werkzeugspindel bereitgestellt. Zum Umschalten zwischen der Antriebsbewegung und der Positionierbewegung ist eine fluidisch betätigbare Kupplung vorgesehen. Winkelköpfe gemäß der DE 10 2006 046 502 A1 sind ständig über eine Drehmomentstütze an einem Gehäuse der Werkzeugmaschine abgestützt.

Die EP 2 857 127 B1 offenbart einen Werkzeughalter mit einer mit einem Werkzeug verspannbaren Spannzange, mit einem Spannzangenaufnahmeteil zur Verbindung mit einer Werkzeugmaschine, und mit einer Spannmutter zur Verbindung der Spannzange mit dem Spannzangenaufnahmeteil, wobei die Spannzange eine polygonförmige Außenfläche aufweist, die mit einer polygonförmigen Innenfläche des Spannzangenaufnahmeteils zusammenwirkt, so dass die Spannzange gegen eine Verdrehung gesichert ist.

Die DE 20 2004 019 777 U1 offenbart eine Bearbeitungseinheit für eine Fräs- und Bohrmaschine mit einem endseitigen standardisierten Spannkegel zum lösbaren Fixieren der Bearbeitungseinheit an einer Arbeitsspindel, wobei dem Spannkegel mindestens ein seitlich vorstehendes Scheibensegment zugeordnet ist, das für den Zugriff eines standardisierten Greifers eines Werkzeugwechslers ausgebildet ist.

Die KR 10 2014 083 090 A offenbart ein Anbaugerät für eine Werkzeugmaschine in Form eines Winkelbohrkopfes mit einem Gehäuse zur Befestigung an einem Spindelgehäuse der Werkzeugmaschine.

Die EP 0 259 517 A1 offenbart eine Werkzeugspindel für eine Werkzeugmaschine, die zur Aufnahme von stehenden und rotierenden Werkzeugen geeignet ist. Bei der Aufnahme stehender Werkzeuge kann eine Drehmomentabstützung über eine Nut am Spindelgehäuse erfolgen, in die ein Stützfinger eingreift.

Die FR 2 687 338 B1 offenbart einen Winkelkopf zur Befestigung an einer Werkzeugaufnahme einer Werkzeugspindel einer Werkzeugmaschine. Der Winkelkopf kann über Zugstangen an der Spindel fixiert werden. Einander zugewandte Kronenräder erlauben eine Positionierung des Winkelkopfes in einer gewünschten Drehorientierung.

Die EP 0 887 134 A1 offenbart eine kombinierte Werkzeugmaschine mit einer Werkzeugspindel nach dem Oberbegriff des Anspruchs 1, die drehende Werkzeuge und stehende Werkzeuge aufnehmen kann, wobei ein Positionierantrieb zur Positionierung stehender Werkzeuge vorgesehen ist, und wobei eine formschlüssige Kupplung mit einander zugewandten Kronenrädern vorgesehen ist, die die Werkzeugspindel bei der Bearbeitung mit stehenden Werkzeugen sperren kann.

Bei einer Überkopfspindel (stehende Werkzeugspindel) müssen der Spänefall bzw. generell die Verschmutzungsneigung gesondert berücksichtigt werden. Daneben ist es generell wünschenswert, solche Werkzeugspindeln universell einzusetzen. Dies umfasst beispielsweise die Eignung zur Bearbeitung mit stehenden Werkzeugen und angetriebenen (rotierenden) Werkzeugen. Ferner kann dies die Eignung zur Bearbeitung mit Werkzeugen umfassen, deren Rotationsachse zu einer Längsachse der Spindel geneigt ist. Es ist grundsätzlich vorstellbar, Werkzeugrevolver für solche Zwecke einzusetzen, vergleiche die EP 1 180 412 A2. Werkzeugrevolver benötigen jedoch einen Antrieb für die Indexierbewegung, um einen der Werkzeugplätze bereitzustellen. Ferner ist die Leistungsfähigkeit rotatorisch betriebener Werkzeuge (Bohrer, Fräser und dergleichen) an einem Werkzeugrevolver häufig begrenzt, weil lediglich Antriebe mit verminderter Leistung nutzbar sind.

Kombinierte Bearbeitungsmaschinen mit zwei (konzentrischen) Werkstückspindeln können grundsätzlich auch zur Bearbeitung zweier Werkstücke genutzt werden, wenn jeweils ein Werkstück an einer der beiden Werkstückspindeln gehalten ist, und wenn die primäre (obere) Werkzeugspindel zur Bearbeitung des ersten Werkstücks und die untere (sekundäre) Werkzeugspindel zur Bearbeitung des zweiten Werkstücks genutzt wird. In diesem Zusammenhang ist es von Vorteil, wenn die sekundäre Werkzeugspindel zumindest hinsichtlich der konkreten Bearbeitungsaufgabe ähnlich leistungsfähig wie die primäre Werkzeugspindel ist.

Vor diesem Hintergrund liegt der vorliegenden Offenbarung die Aufgabe zugrunde, eine Werkzeugspindel und eine zur Aufnahme an der Werkzeugspindel ausgebildete Werkzeugeinheit anzugeben, die auch bei Nutzung als Überkopf-Werkzeugspindel eine leistungsfähige Bearbeitung und einen robusten Betrieb ermöglichen. Insbesondere sollen die besonderen Betriebsbedingungen bei aufrecht stehender Werkzeugspindel berücksichtigt werden. Die Werkzeugspindel soll sich zur Aufnahme unterschiedlicher Werkzeugeinheiten eignen. Die Werkzeugspindel soll eine hohe Antriebsleistung für die Werkzeugeinheiten bereitstellen. Die Kombination aus Werkzeugspindel und Werkzeugeinheit soll für einen automatisierten Werkzeugwechsel geeignet sein. Die Werkzeugspindel soll bedarfsweise eine Positionierung der Werkzeugeinheit ermöglichen, insbesondere hinsichtlich der Drehorientierung in Bezug auf eine Längsachse der Werkzeugspindel. Schließlich soll eine Werkzeugmaschine angegeben werden, die eine offenbarungsgemäße Werkzeugspindel aufweist und zur Bestückung mit offenbarungsgemäßen Werkzeugeinheiten geeignet ist.

Gemäß einem ersten Aspekt bezieht sich die vorliegende Offenbarung auf eine Werkzeugspindel, insbesondere eine stehende Werkzeugspindel, für eine Werkzeugmaschine zur Aufnahme einer Werkzeugeinheit, wobei die Werkzeugspindel Folgendes aufweist:
- ein Spindelgehäuse,
- eine im Spindelgehäuse gelagerte und durch einen Antrieb um eine Längsachse drehbare Spindeleinheit, die einen Werkzeughalter mit einer Werkzeugaufnahme zur Aufnahme einer Werkzeugeinheit aufweist,
- eine am Spindelgehäuse befestigte Spannkappe mit einem auslenkbaren Spannabschnitt zur Klemmung einer aufgenommenen Werkzeugeinheit, und
- eine entlang der Längsachse zwischen einer Entlastungsstellung und einer Spannstellung verfahrbare Betätigungshülse,
wobei die Betätigungshülse einen Betätigungsabschnitt aufweist, der zumindest in der Spannstellung auf den Spannabschnitt einwirkt und diesen auslenkt.

Gemäß einem weiteren Aspekt bezieht sich die vorliegende Offenbarung auf eine Werkzeugmaschine, die Folgendes aufweist:
- zumindest eine um eine horizontal orientierte Längsachse antreibbare Werkstückspindel mit einem Werkstückhalter,
- eine primäre Werkzeugspindel mit einem Werkzeughalter, wobei die primäre Werkzeugspindel in zwei oder mehr translatorischen Achsen relativ zur Werkstückspindel verfahrbar ist, und
- eine sekundäre Werkzeugspindel, die gemäß zumindest einer der hierin beschriebenen Ausführungsformen gestaltet ist, wobei die die sekundäre Werkzeugspindel in zwei oder mehr translatorischen Achsen relativ zur Werkstückspindel verfahrbar ist,

wobei die primäre Werkzeugspindel in zumindest einer Betriebsstellung vertikal orientiert und als hängende Werkzeugspindel gestaltet ist, und
wobei die sekundäre Werkzeugspindel in zumindest einer Betriebsstellung vertikal orientiert und als stehende Werkzeugspindel gestaltet ist.

Gemäß einem weiteren Aspekt bezieht sich die vorliegende Offenbarung auf ein Verfahren zum Betrieb einer Werkzeugmaschine, insbesondere einer Werkzeugmaschine gemäß zumindest einer der hierin beschriebenen Ausgestaltungen, mit den folgenden Schritten:
- Bereitstellung einer Werkzeugeinheit und Aufnahme derselben am Werkzeughalter einer Werkzeugspindel gemäß zumindest einer der hierin beschriebenen Ausgestaltungen,
- falls erforderlich, Verfahren der Betätigungshülse in die Entlastungsstellung,
- Betreiben der Spindeleinheit der sekundären Werkzeugspindel, um die Werkzeugeinheit in einer definierten Rotationsposition in Bezug auf die Längsachse zu positionieren,
- Verfahren der Betätigungshülse in die Spannstellung, um mit der Spannkappe die Werkzeugeinheit in der Rotationsposition zu klemmen, und
- im Falle eines über die Spindeleinheit angetriebenen Werkzeugs, Antreiben der Spindeleinheit zur Rotation des Werkzeugs, um ein Werkstück zu bearbeiten.

Gemäß einem weiteren Aspekt bezieht sich die vorliegende Offenbarung auf eine Werkzeugeinheit für eine Werkzeugspindel einer Werkzeugmaschine, insbesondere eine stehende Werkzeugspindel, wobei die Werkzeugeinheit Folgendes aufweist:
- eine Basis,
- einen Kegelabschnitt, der in konzentrischer Ausrichtung an einer Werkzeugspindel aufnehmbar ist, die eine Längsachse definiert,
- ein von der Basis gehaltenes Werkzeug,
   wobei die Basis zwischen dem Kegelabschnitt und dem Werkzeug angeordnet ist, und
- einen mit der Basis gekoppelten Abdecktopf, der die Basis zumindest abschnittsweise umgibt,
wobei der Abdecktopf einen der Werkzeugspindel zugewandten Rand aufweist, der sich in Richtung auf den Kegelabschnitt erstreckt und diesen zumindest abschnittsweise umgibt.

Gemäß einem weiteren Aspekt bezieht sich die vorliegende Offenbarung auf eine Werkzeugmaschine mit einer Werkzeugspindel, insbesondere einer stehenden Werkzeugspindel, wobei die Werkzeugspindel Folgendes aufweist:
- ein Spindelgehäuse,
- einen Antrieb,
- eine durch den Antrieb um eine Längsachse drehbare Spindeleinheit, die einen Werkzeughalter zur Aufnahme einer offenbarungsgemäßen Werkzeugeinheit aufweist,
- eine am Spindelgehäuse festgelegte Spannkappe mit einem Spannabschnitt, der dazu ausgebildet ist, bei montierter Werkzeugeinheit in einem Klemmzustand auf den Rand des Abdecktopfes einzuwirken, um den Abdecktopf am Spindelgehäuse festzusetzen, und
- eine entlang der Längsachse axial zwischen einer Entlastungsstellung und einer Spannstellung verfahrbare Betätigungshülse, die zwischen der Spindeleinheit und der Spannkappe angeordnet ist,
wobei die Betätigungshülse einen Betätigungsabschnitt aufweist, der zumindest in der Spannstellung auf den Spannabschnitt einwirkt und diesen gegen den Rand drückt.

Gemäß einem weiteren Aspekt bezieht sich die vorliegende Offenbarung auf eine Kombination aus einer offenbarungsgemäßen Werkzeugspindel und einer offenbarungsgemäßen Werkzeugeinheit. Gemäß einem weiteren Aspekt bezieht sich die vorliegende Offenbarung auf einer Kombination aus einer offenbarungsgemäßen Werkzeugspindel und einem Satz offenbarungsgemäß gestalteter Werkzeugeinheiten, die insbesondere Werkzeugeinheiten mit angetriebenen Werkzeugen und Werkzeugeinheiten mit feststehenden Werkzeugen umfassen. Dies kann Werkzeugeinheiten umfassen, die mit mehreren Werkzeugen bestückt sind. Dies kann auch Werkzeugeinheiten umfassen, die als Winkelkopf gestaltet sind.

Eine offenbarungsgemäß gestaltete Werkzeugspindel eignet sich insbesondere als stehende Werkzeugspindel, auch bezeichnet als Überkopfspindel. Die Werkzeugspindel ist universell verwendbar und zur Aufnahme von feststehenden Werkzeugen (beispielsweise Drehwerkzeuge), von angetriebenen Werkzeugen (beispielsweise Bohrwerkzeuge, Fräswerkzeuge), aber auch zur Aufnahme sogenannter Winkelköpfe ausgebildet. Die Betätigungshülse und die Spannkappe bilden einen Klemmmechanismus, der bedarfsweise eine Werkzeugeinheit am Spindelgehäuse festlegt. Wenn die Werkzeugspindel mit der Werkzeugeinheit bestückt ist, umfasst der Klemmmechanismus einen Klemmabschnitt der Werkzeugeinheit, auf den die Spannkappe einwirkt.

Die Spannkappe ist zusätzlich zur eigentlichen Klemmung/Fixierung im Werkzeughalter der Spindeleinheit vorgesehen. Mit anderen Worten ist also dort beispielsweise eine Spannzange vorgesehen, die den Kegelabschnitt der Werkzeugeinheit an/in einer Werkzeugaufnahme der Spindeleinheit fixiert. In einer beispielhaften Ausgestaltung wirkt die Spannkappe mit dem auslenkbaren Spannabschnitt von innen (nach außen) auf den Klemmabschnitt der Werkzeugeinheit ein, um die Werkzeugeinheit am Spindelgehäuse zu fixieren. Auf diese Weise kann die Werkzeugeinheit beispielsweise mit einem Abdecktopf die Spannkappe und gegebenenfalls auch die Betätigungshülse von außen übergreifen. Somit ist neben der Klemmfunktion des Klemmmechanismus ferner eine Schutzfunktion/Abdeckfunktion gegeben, so dass Späne und sonstige Fremdstoffe schlechter eindringen können.

Die Betätigungshülse ist insbesondere axial verfahrbar. In einer beispielhaften Ausgestaltung ist die Betätigungshülse funktional zwischen der Spindeleinheit und der Spannkappe angeordnet. Die Betätigungshülse kann eine reibschlüssige Verbindung zwischen der Spannkappe und einem Abdecktopf der Werkzeugeinheit bewirken. Dies kann herbeigeführt werden, indem die Betätigungshülse den Spannabschnitt (insbesondere radial) gegen einen Klemmabschnitt der Werkzeugeinheit drückt. Die Spannkappe ist beispielhaft dazu ausgebildet, bei montierter Werkzeugeinheit in einem Klemmzustand auf einen Klemmabschnitt der Werkzeugeinheit einzuwirken, um einen der Werkzeugeinheit zugehörigen Abdecktopf am Spindelgehäuse festzusetzen.

Die Werkzeugspindel dient zur Aufnahme und bedarfsweise zum Antrieb eines Werkzeugs zur Bearbeitung eines Werkstücks. Eine offenbarungsgemäß gestaltete Werkzeugspindel erlaubt darüber hinaus auch eine Drehpositionierung. Auf diese Weise kann mit nur einem Antrieb der Spindeleinheit sowohl eine Positionierbewegung als auch eine Antriebsbewegung bewirkt werden. Es versteht sich, dass bei bestimmten Werkzeugeinheiten lediglich eine Positionierung erforderlich ist (beispielsweise Drehwerkzeuge), und dass bei anderen Werkzeugeinheiten lediglich eine rotatorischer Antrieb erforderlich ist (beispielsweise Drehwerkzeuge oder Fräswerkzeuge in konzentrischer Ausrichtung zur Längsachse). Es sind jedoch auch Werkzeugeinheiten vorstellbar, die sowohl eine Positionierung als auch eine Antriebsbewegung erforderlich machen (beispielsweise Winkelköpfe mit angetriebenem Werkzeug).

In einer beispielhaften Ausgestaltung ist die Spindeleinheit mit ihrer Werkzeugaufnahme zur Aufnahme eines HSK-Werkzeughalters (Hohlschaftkegel-Werkzeughalter) ausgebildet. Über eine HSK-Aufnahme kann einerseits eine Fixierung und andererseits eine Drehmitnahme der Werkzeugeinheit erfolgen. Eine offenbarungsgemäße Spindeleinheit stellt jedoch zusätzlich zum HSK-Werkzeughalter einen Mechanismus zum Klemmen oder Verrasten der Werkzeugeinheit bereit, die die Betätigungshülse und die Spannkappe nutzt. Auf diese Weise kann die Werkzeugeinheit bedarfsweise relativ zum Spindelgehäuse der Werkzeugspindel fixiert werden oder für eine Drehbewegung freigegeben werden.

Diese Funktionalität wird mit lediglich einem (vorzugsweise einzigen) Antrieb bereitgestellt, wobei zusätzlich gegebenenfalls ein (vorzugsweise ein einziger) Aktuator für die Betätigungshülse erforderlich ist. An der Spindeleinheit selbst sind nur wenige bauliche Modifikationen erforderlich. Komplexe Lösungen mit zusätzlichen elektromotorischen und/oder fluidischen Antrieben für die Positionierbewegung und/oder die Antriebsbewegung können vermieden werden.

Eine offenbarungsgemäß gestaltete Werkzeugeinheit erlaubt ein universelles Werkzeugkonzept, so dass verschiedenartige Werkzeugeinheiten über ähnliche oder identische Schnittstellen verfügen können, um an der Werkzeugspindel befestigt und von dieser bedarfsweise rotatorisch angetrieben und/oder positioniert zu werden. Dies kann sich auch auf Werkzeugeinheiten mit feststehenden Werkzeugen, Werkzeugeinheiten mit angetriebenen Werkzeugen und auf Werkzeugeinheiten mit Winkelkopf beziehen. Auch Werkzeugeinheiten mit mehreren (üblicherweise feststehenden) Werkzeugen können hiervon umfasst sein.

Der Abdecktopf, die Basis sowie der Kegelabschnitt sind üblicherweise konzentrisch zueinander orientiert. Im montierten Zustand ist die Werkzeugeinheit zumindest mit dem Abdecktopf und dem Kegelabschnitt konzentrisch zur Längsachse der Spindeleinheit der Werkzeugspindel orientiert.

Der Abdecktopf wird in beispielhaften Ausgestaltungen durch die Spannkappe der Werkzeugspindel geklemmt, so dass der Abdecktopf drehfest mit dem Spindelgehäuse verbunden ist. In anderen Ausgestaltungen, insbesondere bei Werkzeugeinheiten mit angetriebenen Werkzeugen in konzentrischer Orientierung, verbleibt gegebenenfalls ein Spalt zwischen der Spannkappe und dem Abdecktopf, so dass eine Relativverdrehung zwischen dem Abdecktopf und dem Spindelgehäuse ermöglicht ist. Gleichwohl wirkt auch in solchen Fällen der Abdecktopf zumindest als Labyrinthdichtung (gemeinsam mit der Spannkappe), so dass auch hier das Eindringen von Spänen und sonstigen Fremdstoffen erschwert ist.

In einer beispielhaften Ausgestaltung kann eine Werkzeugeinheit in Bezug auf das Spindelgehäuse einen Klemmzustand und einen Drehzustand einnehmen. Im Klemmzustand ist der Abdecktopf und gegebenenfalls auch das Werkzeug der Werkzeugeinheit drehfest am Spindelgehäuse aufgenommen. Im Drehzustand kann der Abdecktopf und/oder das Werkzeug der Werkzeugeinheit durch die Spindeleinheit relativ zum Spindelgehäuse rotiert werden. Mit anderen Worten kann also die Werkzeugspindel mit der Spannkappe bei entsprechend ausgebildeten Werkzeugeinheiten zumindest den Abdecktopf der Werkzeugeinheit am Spindelgehäuse festsetzen und damit gegen eine Rotation sichern.

Im Rahmen der vorliegenden Offenbarung umfasst eine Werkzeugeinheit das eigentliche Werkzeug (üblicherweise mit zumindest einer Schneidkante versehen) sowie einen Grundkörper (Basis), mit dem das Werkzeug an der Werkzeugspindel festgelegt werden kann. Der Kegelabschnitt der Werkzeugeinheit ist beispielhaft als Hohlschaftkegel (HSK) gestaltet.

Eine offenbarungsgemäß gestaltete Werkzeugmaschine stellt eine leistungsfähige sekundäre Werkzeugspindel bereit, die beispielhaft als Überkopfspindel gestaltet ist. Die Verschmutzungsneigung von Überkopfspindeln ist bei der Gestaltung offenbarungsgemäßer Werkzeugspindeln berücksichtigt. Die Werkzeugmaschine erlaubt eine universelle Nutzung der sekundären Werkzeugspindel für verschiedene Bearbeitungszwecke. Die sekundäre Werkzeugspindel kann mit verschiedenen Werkzeugeinheiten mit unterschiedlichen Werkzeugen bestückt werden. Mit nur einem Antrieb (durch die Werkzeugspindel selbst) kann die Werkzeugeinheit bedarfsweise positioniert und angetrieben werden. Es versteht sich, dass ein Antrieb der Werkzeugeinheit bzw. von deren Werkzeug bei einem feststehenden Werkzeug nicht erforderlich ist. Für die sekundäre Werkstückspindel kann auf handelsübliche Spindeleinheiten zurückgegriffen werden, wobei diese gegebenenfalls offenbarungsgemäß zu ertüchtigen sind. Hinsichtlich der Leistungsfähigkeit der genutzten Antriebe kann die sekundäre Werkzeugspindel der primären Werkzeugspindel durchaus vergleichbar gestaltet sein, wobei dies nicht einschränkend zu verstehen ist.

Gegebenenfalls ist die primäre Werkzeugspindel mit einem Schwenkantrieb versehen, beispielsweise einer sogenannten B-Achse, die Bewegungen um eine Y-Achse erlaubt. Auf diese Weise kann die primäre Werkzeugspindel für vielfältige Bearbeitungsaufgaben genutzt werden. In einer beispielhaften Ausgestaltung verzichtet die sekundäre Werkzeugspindel auf einen zusätzlichen Schwenkantrieb, so dass in erster Linie translatorische Achsen bereitstehen. Gleichwohl erlaubt die sekundäre Werkzeugspindel bedarfsweise eine Drehpositionierung der Werkzeugeinheit um die Längsachse der Werkzeugspindel. Dies kann ohne zusätzlichen Antrieb bewerkstelligt werden.

Es versteht sich, dass gegebenenfalls mehr als nur eine primäre Werkzeugspindel und mehr als nur eine sekundäre Werkzeugspindel vorgesehen sein können. Auf diese Weise lassen sich beispielsweise bei einer Werkzeugmaschine mit zwei einander zugewandten und konzentrisch ausgerichteten Werkstückspindeln zwei identische oder verschiedenartige Werkstücke bearbeiten.

Eine stehende Werkzeugspindel ist eine Werkzeugspindel, die zumindest in einer Neutralstellung mit ihrem Werkzeughalter nach oben orientiert ist. Damit ist eine stehende Werkzeugspindel im Gegensatz zu einer sogenannten hängenden Werkzeugspindel anfälliger für einen Späneeintrag und/oder Verschmutzungen von oben. Sowohl eine stehende Werkzeugspindel als auch eine hängende Werkzeugspindel sind in ihrer Neutralstellung regelmäßig vertikal orientiert, ansonsten liegt jedoch eine gegensätzliche Orientierung vor. Eine hängende Werkzeugspindel bearbeitet ein Werkstück üblicherweise von oben (oder seitlich). Eine stehende Werkzeugspindel bearbeitet ein Werkstück üblicherweise von unten (oder seitlich). Hinsichtlich der möglichen Arbeitsbereiche kann es durchaus Überlappungen zwischen der stehenden Werkzeugspindel und der hängenden Werkzeugspindel geben.

In einer Spannstellung der Betätigungshülse bzw. der Spannkappe kann sich eine aufgenommene Werkzeugeinheit (hinsichtlich eines Rotationsfreiheitsgrades um die Längsachse) in einem Klemmzustand befinden. Eine gemeinsam durch den Abdecktopf und die Spannkappe gebildete Reibkupplung ist geschlossen. In einer Entlastungsstellung kann sich eine aufgenommene Werkzeugeinheit (hinsichtlich eines Rotationsfreiheitsgrades um die Längsachse) in einer Freigabestellung bzw. einem Entlastungszustand befinden. Eine gemeinsam durch den Abdecktopf und die Spannkappe gebildete Reibkupplung ist geöffnet.

Ein offenbarungsgemäß gestaltetes Verfahren erlaubt in einfacher Weise die Aufnahme und Positionierung von Werkzeugeinheiten an einer Offenbarungsgemäß gestalteten Werkzeugspindel. Dies ist allein mit dem Antrieb der Werkzeugspindel möglich, weil die Werkzeugeinheit über deren Abdecktopf bedarfsweise am Spindelgehäuse festgelegt werden kann. Wenn also keine drehfeste Verbindung zwischen dem Abdecktopf und dem Spindelgehäuse gegeben ist, kann die Spindeleinheit der Werkzeugspindel die aufgenommene Werkzeugeinheit um die Längsachse der Spindeleinheit rotieren. Auf diese Weise können gewünschte Drehpositionen angefahren werden. Wenn der Abdecktopf der Werkzeugeinheit über die Spannkappe am Spindelgehäuse festgelegt ist, verbleibt die Werkzeugeinheit in der angefahrenen Drehpositionen.

Das offenbarungsgemäße Verfahren erlaubt gemäß einem Aspekt die Positionierung und Fixierung von Winkelköpfen an der Werkzeugspindel. Ferner erlaubt das offenbarungsgemäße Verfahren gemäß einem weiteren Aspekt die Positionierung von Werkzeugeinheiten mit mehreren feststehenden Werkzeugen, die um die Längsachse verteilt angeordnet sind. Auf diese Weise kann die Werkzeugeinheit ähnlich einem Werkzeugrevolver indexiert werden, um ein gewünschtes Werkzeug bereitzustellen.

Im Falle eines feststehenden Werkzeugs (Drehwerkzeug und dergleichen) erfolgt die Bearbeitung in einem drehfest fixierten Zustand der Werkzeugeinheit. Im Falle eines angetriebenen rotierbaren Werkzeugs (Bohrer, Fräser und dergleichen) erfolgt die Bearbeitung in einem Zustand, in dem die Spindeleinheit das Werkzeug durch den Abdecktopf hindurch antreibt.

Gemäß einer beispielhaften Ausgestaltung der Werkzeugspindel umfasst die Betätigungshülse einen Kolben, insbesondere einen Ringkolben. Wir anderen Worten kann also die Betätigungshülse selbst einen Teil des Aktuators sein, der den Spannabschnitt der Spannkappe auslenkt. Beispielhaft umfasst die Betätigungshülse einen fluidisch betätigten Kolben, insbesondere einen hydraulisch oder pneumatisch betätigten Kolben. Es versteht sich, dass die Betätigungshülse grundsätzlich auch mit einem elektromotorischen Aktuator versehen oder gekoppelt sein kann.

Gemäß einer weiteren beispielhaften Ausgestaltung der Werkzeugspindel erstreckt sich die Spindeleinheit durch die Betätigungshülse. Mit anderen Worten ist innerhalb der Betätigungshülse ein Innenraum vorgesehen, der Bauraum für die Spindeleinheit bereitstellt. Auf diese Weise können übliche, kartuschenartig gestaltete Spindeleinheiten genutzt werden. Beispielhaft umfasst die Betätigungshülse einen Ringkolben, durch den sich die Spindeleinheit erstreckt.

Gemäß einer weiteren beispielhaften Ausgestaltung der Werkzeugspindel ist die Betätigungshülse verschieblich aber drehfest am Spindelgehäuse gelagert. Dies ermöglicht eine (üblicherweise axiale) Relativbewegung zwischen der Betätigungshülse und der Spindeleinheit. Beispielhaft kann die Betätigungshülse entlang der Längsachse eine Hubbewegung mit einem bestimmten Hub ausführen, um den Spannabschnitt der Spannkappe auszulenken.

Gemäß einer weiteren beispielhaften Ausgestaltung der Werkzeugspindel ist der Betätigungsabschnitt konisch gestaltet, wobei der Betätigungsabschnitt bei der Bewegung von der Entlastungsstellung in die Spannstellung den auslenkbaren Spannabschnitt nach außen drängt. Beispielsweise ist der Betätigungsabschnitt in Richtung auf die Werkzeugeinheit an seiner Außenseite verjüngt, um dort eine Konusfläche bereitzustellen. Gleichermaßen kann auch bei der Spannkappe eine korrespondierende Konusfläche bereitgestellt sein. Eine axiale Relativbewegung zwischen der Betätigungshülse und der Spannkappe sorgt dann für eine seitliche (zumindest teileweise radiale) Auslenkung des auslenkbaren Spannabschnitts.

In einer beispielhaften Ausgestaltung weist die Betätigungshülse beim Betätigungsabschnitt eine konische Außenfläche aus, wobei die Spannkappe beim Spannabschnitt eine konische Innenfläche aufweist. Auf diese Weise sitzt der Betätigungsabschnitt innerhalb des Spannabschnitts, um diesen nach außen zu drängen.

Gemäß einer weiteren beispielhaften Ausgestaltung der Werkzeugspindel ist die Spannkappe beim auslenkbaren Spannabschnitt geschlitzt. Auf diese Weise kann die Spannkappe beim Spannabschnitt in Segmente unterteilt werden. Beispielsweise sind mehrere Längsschlitze vorgesehen, die sich im Wesentlichen parallel zur Längsachse erstrecken und um die Längsachse verteilt sind. Dies erhöht die Verformbarkeit des auslenkbaren Spannabschnitts.

Gemäß einer weiteren beispielhaften Ausgestaltung der Werkzeugspindel ist ein Verdrängungsraum für die Betätigungshülse bereitgestellt, der insbesondere zumindest abschnittsweise durch die Spannkappe gebildet ist. Dies bezieht sich insbesondere auf Gestaltungen, bei denen die Betätigungshülse einen Kolben oder Ringkolben umfasst. Beispielhaft wird der Verdrängungsraum gemeinsam durch die Spannkappe und einen Basisring bereitgestellt. Der Verdrängungsraum ist gemäß dieser Ausgestaltung fest am Spindelgehäuse angeordnet bzw. ausgebildet. Innerhalb des Verdrängungsraums kann ein Kolben/Ringkolben axial bewegt werden, um die Betätigungshülse zwischen der Entlastungsstellung und der Spannstellung zu verfahren. Der Verdrängungsraum kann auch als Ringraum oder Ringzylinder bezeichnet werden. Innerhalb des Verdrängungsraums ist der Kolben/Ringkolben beweglich angeordnet.

In einer beispielhaften Ausgestaltung mündet zumindest ein Fluidkanal in den Verdrängungsraum. Auf diese Weise kann ein unter Druck stehendes Fluid eingeleitet werden, um die Betätigungshülse zu bewegen. Eine Rückstellung, etwa zur Bewegung der Betätigungshülse aus der Spannstellung zurück in die Entlastungsstellung, ist grundsätzlich fluidisch oder mittels Federkraft vorstellbar.

In einer beispielhaften Ausgestaltung kann sowohl an einer der Werkzeugeinheit zugewandten Seite des Kolbens als auch an einer von der Werkzeugeinheit abgewandten Seite des Kolbens ein unter Druck stehendes Fluid (hydraulisches oder pneumatisches Druckmittel) eingeleitet werden, um die Betätigungshülse zwischen der Entlastungsstellung und der Spannstellung hin und her zu verfahren. Gemäß dieser Ausgestaltung erfolgt die Rückstellung fluidisch.

In einer beispielhaften Ausgestaltung ist die Spannkappe zumindest abschnittsweise in Bereichen, die der Betätigungshülse zugewandt sind, fluiddicht vulkanisiert und/oder beschichtet. Auf diese Weise werden Leckagen vermieden.

Gemäß einer weiteren beispielhaften Ausgestaltung der Werkzeugspindel weist die Werkzeugaufnahme eine Hohlschaftkegel-Spanneinheit auf. Die Hohlschaftkegel-Spanneinheit kann die Werkzeugeinheit an einem Kegelabschnitt greifen, zentrieren und halten. Die Hohlschaftkegel-Spanneinheit ist zusätzlich zum Klemmmechanismus vorgesehen. Mit einer Hohlschaftkegel-Spanneinheit ist die Werkzeugspindel zur Aufnahme von HSK-Werkzeugen mit Hohlschaftkegel ausgebildet. Die Hohlschaftkegel kann beispielhaft eine Spannzange aufweisen, die in den Kegelabschnitt der Werkzeugeinheit eingreift und diesen gegen eine Werkzeugaufnahme der Spindeleinheit verspannt. Der durch die Betätigungshülse und die Spannkappe gebildete Klemmmechanismus kann als äußerer Klemmmechanismus bezeichnet werden. Die Hohlschaftkegel-Spanneinheit kann auch als innerer Spannmechanismus bezeichnet werden.

Eine Aufnahme der Werkzeugeinheit über die Hohlschaftkegel-Spanneinheit erlaubt einen direkten Antrieb der Werkzeuge der Werkzeugeinheit, insbesondere von Bohrwerkzeugen oder Fräswerkzeugen. Unbeschadet dessen erlaubt die Hohlschaftkegel-Spanneinheit eine Positionierbewegung der Werkzeugeinheit, so dass die Werkzeugeinheit mit dem zumindest einen Werkzeug durch eine gezielte gesteuerte Drehbewegung der Spindeleinheit in einer gewünschten Drehorientierung in Bezug auf die Längsachse ausgerichtet werden kann.

Gemäß einer weiteren beispielhaften Ausgestaltung der Werkzeugspindel ist die Spindeleinheit zur drehfesten Aufnahme eines Hohlschaftkegels ausgebildet, wobei der Spannabschnitt zusätzlich zur Klemmung eines werkzeugseitigen Klemmabschnitts ausgebildet ist. Es gibt also einen (äußeren) Klemmmechanismus und einen (inneren) Spannmechanismus. Die Spannkappe und die Betätigungshülse bilden gemeinsam mit einem Klemmabschnitt der Werkzeugeinheit einen zusätzlichen Klemmmechanismus.

Die sich ergebende Kombination aus Spindeleinheit und Werkzeugeinheit kann beispielhaft in drei Modi betrieben werden. Zunächst wird die Werkzeugeinheit mit dem Kegelabschnitt am (inneren) Spannmechanismus festgelegt.

Beispielsweise für Drehwerkzeuge kann bei geöffnetem (äußeren) Klemmmechanismus über die Spindeleinheit die Werkzeugeinheit rotiert werden, um ein Drehwerkzeug zu positionieren. Dies kann auch eine Bereitstellung eines Drehwerkzeugs aus einer Mehrzahl von Drehwerkzeugen umfassen, die durch die Werkzeugeinheit bereitgestellt werden. Sodann kann der (äußere) Klemmmechanismus geschlossen bzw. geklemmt werden, um das Drehwerkzeug relativ zum Spindelgehäuse zu fixieren. Dann kann ein Werkstück bearbeitet werden.

Beispielsweise für Fräswerkzeuge oder Bohrwerkzeuge kann die Bearbeitung bewusst bei geöffnetem (äußeren) Klemmmechanismus erfolgen, weil auf diese Weise das Werkzeug direkt über die Spindeleinheit angetrieben wird und relativ zum Spindelgehäuse rotierbar ist. In diesem Modus muss der Klemmmechanismus nicht geklemmt werden, aufgrund der Gestaltung der beteiligten Bauteile (Abdecktopf, Spannkappe und Betätigungshülse) ergibt sich zumindest eine Labyrinthdichtung mit geringem Spalt, so dass das Eindringen von Spänen und Betriebsstoffen erschwert wird.

Beispielsweise für Werkzeugeinheiten mit Winkelkopf kann bei geöffnetem (äußeren) Klemmmechanismus zunächst über die Spindeleinheit ein Kopfgehäuse des Winkelkopfes rotiert werden, um ein angetriebenes Werkzeug in gewünschter Weise in Bezug auf die Längsachse der Spindeleinheit zu positionieren. Sodann kann der (äußere) Klemmmechanismus geschlossen bzw. geklemmt werden, um das Kopfgehäuse des Winkelkopfes relativ zum Spindelgehäuse zu fixieren. Dies kann jedoch zusätzlich eine Entkopplung einer bei geöffnetem Klemmmechanismus geschlossenen Verbindung innerhalb des Winkelkopfes umfassen, wodurch das Werkzeug (beispielsweise Bohrwerkzeuge oder Fräswerkzeug mit geneigter Orientierung relativ zur Längsachse der Spindeleinheit) des Winkelkopfes durch die Spindeleinheit relativ zum Spindelgehäuse rotierbar ist. Bei Werkzeugeinheiten mit Winkelkopf kann folglich die Bewegung der Betätigungshülse des Klemmmechanismus zwischen der Entlastungsstellung und der Spannstellung jeweils eine "Kupplung" öffnen und eine andere "Kupplung" schließen. Dies kann beispielsweise unter Nutzung einer resultierenden axialen Komponente und einer resultierenden radialen Komponente der Bewegung der Betätigungshülse umgesetzt werden.

Gemäß einer weiteren beispielhaften Ausgestaltung der Werkzeugspindel ist die Werkzeugaufnahme mit einer Werkzeugeinheit mit feststehendem Werkzeug bestückt, wobei der Spannabschnitt in der Spannstellung die Werkzeugeinheit klemmt. Bei dem feststehenden Werkzeug handelt es sich beispielhaft um ein Drehwerkzeug. Es ist auch vorstellbar, eine Werkzeugeinheit mit einer Mehrzahl von Drehwerkzeugen zu bestücken, die um eine Längsachse der Werkzeugeinheit verteilt sind. Sodann kann eine Auswahl eines gewünschten Werkzeugs durch entsprechende Rotationsbewegung der Werkzeugeinheit erfolgen.

In der Spannstellung ist die Werkzeugeinheit mit dem zumindest einen Werkzeug in Bezug auf die Werkzeugspindel fixiert, es sind keine Drehbewegungen um die Längsachse ermöglicht. Auf diese Weise lassen sich Drehbearbeitungen bei rotierendem Werkstück durchführen. In der Entlastungsstellung ist eine Drehpositionierung des zumindest einen Werkzeugs über die Spindeleinheit ermöglicht, dies umfasst eine Relativrotation zwischen der Spannkappe und dem Klemmabschnitt des Werkzeugs.

Gemäß einer weiteren beispielhaften Ausgestaltung der Werkzeugspindel ist die Werkzeugeinheit in der Entlastungsstellung durch die Spindeleinheit für Positionierzwecke rotierbar. Damit eignet sich die Werkzeugspindel auch für Werkzeugeinheiten, die mit mehreren Werkzeugen bestückt sind.

Gemäß einer weiteren beispielhaften Ausgestaltung der Werkzeugspindel ist die Werkzeugaufnahme mit einer Werkzeugeinheit mit rotierbarem Werkzeug bestückt. Ein solches Werkzeug ist über die Spindeleinheit antreibbar.

Gemäß einer weiteren beispielhaften Ausgestaltung der Werkzeugspindel verbleibt die Betätigungshülse bei der Bearbeitung mit der Werkzeugeinheit mit rotierbarem Werkzeug in der Entlastungsstellung. Auf diese Weise wird eine Klemmung des Klemmmechanismus durch entsprechende Ansteuerung der Betätigungshülse vermieden.

Gemäß einer weiteren beispielhaften Ausgestaltung führt bei der Bearbeitung mit der Werkzeugeinheit mit rotierbarem Werkzeug eine Bewegung der Betätigungshülse in die Spannstellung nicht zu einer Klemmung der Werkzeugeinheit. Auf diese Weise wird eine Klemmung des Klemmmechanismus konstruktiv vermieden. Wenn Beispielsweise ein Abdecktopf der Werkzeugeinheit so ausgelegt ist, dass auch bei einer in die Spannstellung verfahrenen Betätigungshülse und ausgelenktem Spannabschnitt trotzdem noch ein Spalt zwischen dem Abdecktopf und der Spannkappe verbleibt, ist eine Relativrotation und ein Antrieb des Werkzeugs unbeschadet der Stellung der Betätigungshülse möglich.

Gemäß einer weiteren beispielhaften Ausgestaltung ist bei der Bearbeitung mit der Werkzeugeinheit mit rotierbarem Werkzeug eine Relativrotation zwischen dem Abdecktopf der Werkzeugeinheit und der Basis der Werkzeugeinheit ermöglicht. Auch auf diese Weise kann das Werkzeug rotatorisch angetrieben werden, unabhängig davon, ob der Abdecktopf durch den Klemmmechanismus am Spindelgehäuse festgelegt ist oder nicht.

Gemäß einer weiteren beispielhaften Ausgestaltung der Werkzeugspindel ist die Werkzeugaufnahme mit einer Werkzeugeinheit mit einem Winkelkopf bestückt, der zur Aufnahme eines rotierbaren Werkzeugs ausgebildet ist. Der Winkelkopf dient beispielhaft zur Aufnahme eines angetriebenen Werkzeugs mit einer Werkzeug-Rotationsachse, die gegenüber der Längsachse der Spindeleinheit geneigt ist.

Gemäß einer weiteren beispielhaften Ausgestaltung der Werkzeugspindel ist in der Spannstellung das Kopfgehäuse des Winkelkopfes am Spindelgehäuse festgelegt, wobei das Werkzeug im Winkelkopf über die Spindeleinheit antreibbar ist. In der Spannstellung des Klemmmechanismus ist also das Kopfgehäuse fixiert, hingegen kann das Werkzeug des Winkelkopfes durch das Kopfgehäuse hindurch über die Spindeleinheit rotiert werden.

Gemäß einer weiteren beispielhaften Ausgestaltung der Werkzeugspindel ist in der Entlastungsstellung das Kopfgehäuse des Winkelkopfes zur Drehmitnahme mit einer Basis des Winkelkopfes gekoppelt und gemeinsam mit der Basis durch die Spindeleinheit relativ zum Spindelgehäuse zu Positionierzwecken rotierbar. In der Entlastungsstellung ist folglich eine Drehpositionierung ermöglicht.

Wenn die Bewegung der Betätigungshülse zwischen der Entlastungsstellung in der Spannstellung beispielhaft eine radial wirksame Komponente und eine axial wirksame Komponente umfasst, können mit einer einzigen Bewegung zwei "Kupplungen" betätigt werden, nämlich der Klemmmechanismus zum Festlegen des Kopfgehäuses am Spindelgehäuse (eingerückt in der Spannstellung) sowie ein interner Drehmitnahmemechanismus innerhalb des Winkelkopfes zur Drehmitnahme zwischen der Werkzeugspindel und dem Kopfgehäuse (eingerückt in der Entlastungsstellung).

In einer beispielhaften Ausgestaltung der Werkzeugspindel liegt in der Spannstellung eine reibschlüssige oder kraftschlüssige Verbindung zwischen der Spannkappe der Werkzeugspindel und dem Klemmabschnitt der Werkzeugeinheit vor. In einer weiteren beispielhaften Ausgestaltung liegt in der Spannstellung zumindest teilweise auch eine formschlüssige Verbindung zwischen der Spannkappe der Werkzeugspindeln und dem Klemmabschnitt der Werkzeugeinheit vor.

In einer beispielhaften Ausgestaltung der Werkzeugspindel liegt in der Entlastungsstellung eine reibschlüssige oder kraftschlüssige Verbindung zur Drehmitnahme zwischen der Werkzeugspindel und dem Kopfgehäuse des Winkelkopfes vor. In einer weiteren beispielhaften Ausgestaltung liegt in der Entlastungsstellung zumindest teilweise auch eine formschlüssige Verbindung zur Drehmitnahme zwischen der Werkzeugspindel und dem Kopfgehäuse des Winkelkopfes vor.

Eine kraftschlüssige oder reibschlüssige Verbindung lässt sich durch entsprechende Reibpaarungen erzeugen, die selbsthemmend sind und/oder federunterstützt oder anderweitig vorgespannt sein können. Eine zumindest teilweise formschlüssige Verbindung lässt sich durch Verzahnungen o. ä. erzeugen. Auch Kombinationen aus Kraftschluss/Reibschluss und Formschluss zur Sicherung eine Verbindung sind vorstellbar.

In einer beispielhaften Ausgestaltung der Werkzeugspindel umfasst die Spindeleinheit einen Direktantrieb. In einer weiteren beispielhaften Ausgestaltung umfasst die Werkzeugspindel einen mit der Spindeleinheit über ein Zugmittel oder sonstigen Koppelmechanismus gekoppelten Antrieb. Üblicherweise ist die Spindeleinheit gezielt ansteuerbar, um gewünschte Drehpositionen um die Längsachse der Spindeleinheit anzufahren. Auf diese Weise können Werkzeuge positioniert werden. Beispielhaft umfasst der Antrieb der Spindeleinheit einen Servomotor. Es versteht sich, dass die Spindeleinheit zusätzlich dazu ausgebildet ist, Werkzeuge rotatorisch anzutreiben, beispielsweise Fräswerkzeuge oder Bohrwerkzeuge.

Gemäß einer beispielhaften Ausgestaltung der Werkzeugeinheit weist der Abdecktopf eine umlaufende Handhabungsnut auf. Auf diese Weise kann die Werkzeugeinheit über den Abdecktopf mittels Handhabungstechnik transferiert und bedarfsweise in Magazinen oder an sonstigen Ablageplätzen abgelegt werden. Dies ist auch dann möglich, wenn der Abdecktopf eine ursprüngliche Handhabungsnut, die beispielsweise an der Basis ausgebildet ist, verdeckt. Auf diese Weise kann der Abdecktopf zur Ertüchtigung von Standard-Werkzeugen genutzt werden, die beispielsweise mit Standard-Futtern und/oder Standard-Werkzeughaltern versehen sind, beispielsweise HSK-Werkzeugen.

Gemäß einer weiteren beispielhaften Ausgestaltung der Werkzeugeinheit weist der Rand einen Klemmabschnitt auf, der mit einem Spannabschnitt einer Spannkappe kontaktierbar ist. In einer weiteren beispielhaften Ausgestaltung der Werkzeugeinheit weist der Abdecktopf am Rand einen Zylinderabschnitt auf, dessen Innenwand den Klemmabschnitt bildet. Auf diese Weise kann der Abdecktopf ähnlich einer Bremstrommel gestaltet sein, die von innen mit Reibbelägen kontaktiert wird.

Gemäß einer weiteren beispielhaften Ausgestaltung der Werkzeugeinheit bilden im montierten Zustand der Klemmabschnitt und der Spannabschnitt eine Reibkupplung zum Festsetzen des Abdecktopfes an einem Spindelgehäuse. In einer weiteren beispielhaften Ausgestaltung der Werkzeugeinheit weist der Rand einen Klemmabschnitt auf, auf den in einem Klemmzustand ein an einem Spindelgehäuse festgelegter Spannabschnitt einwirkt, um den Abdecktopf am Spindelgehäuse festzusetzen.

Gemäß einer weiteren beispielhaften Ausgestaltung der Werkzeugeinheit deckt der Abdecktopf im montierten Zustand eine Stirnseite der Spindeleinheit ab, insbesondere spänesicher. Dies kann beispielhaft bei direktem Kontakt zwischen dem Abdecktopf und der Spannkappe erfolgen. Sofern kein direkter Kontakt zwischen dem Abdecktopf und der Spannkappe gegeben ist, entsteht zumindest eine Labyrinthdichtung mit hinreichend geringem Spalt.

Gemäß einer weiteren beispielhaften Ausgestaltung der Werkzeugeinheit erstreckt sich der Abdecktopf mit seinem Rand zumindest teilweise axial über den auslenkbaren Spannabschnitt der Spannkappe. Sofern sich die Betätigungshülse und die Spannkappe der Werkzeugspindel um die Spindeleinheit herum erstrecken, wird dadurch die Stirnseite der Spindeleinheit vollständig oder nahezu vollständig von der Werkzeugeinheit bzw. von deren Abdecktopf abgedeckt.

Gemäß einer weiteren beispielhaften Ausgestaltung der Werkzeugeinheit weist die Basis eine umlaufende Nut auf, wobei der Abdecktopf mit der umlaufenden Nut gekoppelt ist. Insbesondere ist der Abdecktopf drehfest mit der umlaufenden Nut gekoppelt. Auf diese Weise kann beispielhaft die ohnehin ursprünglich an der Basis der Werkzeugeinheit vorgesehene Handhabungsnut zur Aufnahme und Fixierung des Abdecktopfes genutzt werden.

Gemäß einer weiteren beispielhaften Ausgestaltung der Werkzeugeinheit ist der Abdecktopf mittelbar über eine Verbindungsscheibe mit der umlaufenden Nut der Basis gekoppelt, wobei die Verbindungscheibe insbesondere eine geteilte Scheibe ist. Auf diese Weise kann der Abdecktopf mittelbar an der umlaufenden Nut befestigt werden. Es kann sich eine hinreichend dichte Verbindung zwischen dem Abdecktopf und der Basis der Werkzeugeinheit ergeben, so dass auch in diesem Bereich der Nut ein Eindringen von Spänen oder sonstigen Verschmutzungen erschwert ist.

Gemäß einer weiteren beispielhaften Ausgestaltung der Werkzeugeinheit legt die Verbindungscheibe den Abdecktopf drehfest an der Basis fest. Dies kann beispielhaft durch eine geeignete Klemmung erfolgen, etwa unter Verwendung eines Klemmrings mit konischer Form, der von einer Konusfläche des Abdecktopfes kontaktiert wird. Beispielhaft ist die Verbindungscheibe dazu ausgebildet, den Abdecktopf gegen den Klemmring und damit den Klemmring gegen die Basis der Werkzeugeinheit zu verspannen. Auf diese Weise kann der Abdecktopf kraftschlüssig bzw. reibschlüssig drehfest mit der Basis verbunden werden. Der Klemmring kann geschlitzt sein

Gemäß einer weiteren beispielhaften Ausgestaltung der Werkzeugeinheit ist die Verbindungscheibe gemeinsam mit dem Abdecktopf relativ zur Basis rotierbar. Dies gilt zumindest in bestimmten Betriebszuständen beispielsweise für Werkzeugeinheiten, die als Winkelkopf gestaltet sind, und bei denen die Spindeleinheit ein angetriebenes Werkzeug rotatorisch antreibt. Dies führt nämlich bei einem geklemmten Abdecktopf dazu, dass die Antriebsbewegung (Rotationsbewegung) durch den festgelegten Abdecktopf hindurch übertragen wird.

Gemäß einer weiteren beispielhaften Ausgestaltung der Werkzeugeinheit ist der Abdecktopf drehfest mit der Basis gekoppelt, wobei die Basis ein feststehendes Werkzeug trägt. Insbesondere ist die Basis permanent drehfest mit dem Abdecktopf verbunden. Eine solche Werkzeugeinheit eignet sich beispielhaft für Drehwerkzeuge, also für nicht angetriebene Werkzeuge. Grundsätzlich eignet sich eine solche Werkzeugeinheit auch für angetriebene Werkzeuge, die dann gemeinsam mit dem Abdecktopf rotieren, wobei in einem solchen Fall dafür Sorge zu tragen ist, dass der Abdecktopf relativ zur Spannkappe rotieren kann.

Gemäß einer weiteren beispielhaften Ausgestaltung der Werkzeugeinheit trägt die Basis zumindest ein angetriebenes Werkzeug, beispielsweise Bohrer, Fräser und dergleichen. Dies kann mit einer Gestaltung kombiniert werden, bei der der Abdecktopf relativ zur Basis rotierbar ist. Es ist jedoch auch eine Kombination mit einer Gestaltung vorstellbar, bei der die Basis gemeinsam mit dem Abdecktopf relativ zum Spindelgehäuse rotierbar ist.

Gemäß einer weiteren beispielhaften Ausgestaltung der Werkzeugeinheit ist der Abdecktopf relativ zur Basis zwischen einer ersten Stellung, in der der Abdecktopf drehfest mit der Basis gekoppelt ist, und einer zweiten Stellung, in der die Basis relativ zum Abdecktopf rotierbar ist, axial beweglich. Zu diesem Zweck kann innerhalb der Werkzeugeinheit eine kraftschlüssige und/oder formschlüssige Kupplung ausgebildet sein. Auf diese Weise kann die Werkzeugeinheit als Winkelkopf gestaltet werden, wobei die Spindeleinheit mit nur einem Antrieb einerseits eine Drehpositionierung des Winkelkopfes und andererseits einen Antrieb des vom Winkelkopf getragenen Werkzeugs ermöglicht.

Gemäß einer weiteren beispielhaften Ausgestaltung der Werkzeugeinheit ist der Abdecktopf gegen die Kraft eines Vorspannelements axial relativ zur Basis beweglich. Das Vorspannelement ist beispielhaft als Feder, insbesondere als Balgfeder gestaltet. Andere Arten von Vorspannelementen können auch verbaut sein.

Gemäß einer weiteren beispielhaften Ausgestaltung der Werkzeugeinheit trägt die Basis ein Kopfgehäuse, das zur Aufnahme eines Werkzeugs mit einer gegenüber einer Längsachse der Werkzeugspindel gekippten Rotationsachse ausgebildet ist. Das Kopfgehäuse kann auch als Umlenkgehäuse bezeichnet werden, weil damit üblicherweise eine Umlenkung der Antriebsbewegung zwischen der Längsachse der Spindeleinheit und der Rotationsachse des am Kopfgehäuse aufgenommenen Werkzeugs bewerkstelligt wird.

Gemäß einer weiteren beispielhaften Ausgestaltung der Werkzeugeinheit legt der Abdecktopf in der zweiten Stellung das Kopfgehäuse am Spindelgehäuse fest, wobei der Abdecktopf in der ersten Stellung vom Spindelgehäuse entkoppelt ist und die Basis und das Kopfgehäuse zur gemeinsamen Rotation verbindet. Auf diese Weise können mit nur einem Betätigungselement, beispielsweise der Betätigungshülse, im Ergebnis zwei Funktionen/Freiheitsgrade gesteuert werden, nämlich die Positionierbewegung des Kopfgehäuse um die Längsachse sowie die Antriebsbewegung des Werkzeugs um dessen Rotationsachse.

Werkzeugeinheiten und Werkzeugspindeln gemäß der vorliegenden Offenbarung eignen sich grundsätzlich für sogenannte kombinierte Bearbeitungsmaschinen, die horizontal orientierte Werkstückachsen sowie zumindest eine obere, hängende Werkzeugspindel und zumindest eine untere, stehende Werkzeugspindel, die insbesondere jeweils eine vertikale Orientierung aufweisen. Unbeschadet dessen können die Werkzeugeinheiten, die Werkzeugspindeln sowie Kombinationen aus Werkzeugeinheit und Werkzeugspindel auch bei anders gestalteten Werkzeugmaschinen genutzt werden. Eine offenbarungsgemäße Kombination aus Werkzeugeinheit und Werkzeugspindel weist zumindest in beispielhaften Ausgestaltungen Vorteile hinsichtlich der Abdichtung der Stirnseite der Werkzeugspindel und/oder Vorteile hinsichtlich der universellen Anwendbarkeit für verschiedene Arten von Werkzeugeinheiten (stehende Werkzeuge, angetriebene Werkzeuge, Winkelköpfe) und der Steuerung der erforderlichen Funktionen (Positionierbewegung, Antriebsbewegung) auf.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile ergeben sich aus der nachfolgenden Beschreibung mehrerer bevorzugter Ausführungsbeispiele unter Bezugnahme auf die Zeichnungen. Es zeigen:
- Fig. 1:: eine perspektivische Ansicht einer Werkzeugmaschine, die als kombinierte Dreh- und Fräsmaschine mit horizontaler Werkstückspindel gestaltet ist;
- Fig. 2: eine perspektivische Ansicht einer Werkzeugspindel, die als stehende Spindel gestaltet ist und eine Werkzeugeinheit trägt;
- Fig. 3:: eine perspektivische, explodierte Schnittansicht einer Betätigungshülse und einer Spannkappe, die Bestandteil der in den Fig. 2 gezeigten Werkzeugspindel sind;
- Fig. 4:: eine perspektivische, teilweise explodierter Detailansicht der Werkzeugspindel gemäß Fig. 2, wobei eine von der Werkzeugspindel beabstandete Werkzeugeinheit gezeigt ist, die abweichend von der Werkzeugeinheit gemäß Fig. 2 gestaltet ist;
- Fig. 5:: eine perspektivische Ansicht der in Fig. 3 gezeigten Werkzeugeinheit in einer von Fig. 4 abweichenden Orientierung;
- Fig. 6:: eine Schnittansicht durch die Werkzeugeinheit gemäß Fig. 4 und Fig. 5;
- Fig. 7:: eine weitere teilweise geschnittene Ansicht einer weiteren Ausgestaltung einer Werkzeugeinheit;
- Fig. 8:: eine teilweise geschnittene Teilansicht durch einen Werkzeughalter der in den Figuren 2 und 3 gezeigten Werkzeugspindel (in Fig. 8 nicht mit einer Werkzeugeinheit bestückt) zur Veranschaulichung zweier Zustände/Stellungen;
- Fig. 9:: eine weitere geschnittene Teilansicht durch einen Werkzeughalter der in den Figuren 2 und 3 gezeigten Werkzeugspindel zur Veranschaulichung zweier Zustände/Stellungen, wobei die Werkzeugspindel mit einer als Winkelkopf gestalteten Werkzeugeinheit bestückt ist;
- Fig. 10:: eine teilweise geschnittene Ansicht durch eine weitere Ausgestaltung einer Werkzeugeinheit;
- Fig. 11:: eine frontale Ansicht einer weiteren Ausgestaltung einer Werkzeugspindel mit einer Mehrzahl von Werkzeughaltern;
- Fig. 12:: ein vereinfachtes Blockdiagramm zur Veranschaulichung einer Ausgestaltung eines Verfahrens zum Betrieb einer Werkzeugmaschine;
- Fig. 13:: ein vereinfachtes Blockdiagramm zur Veranschaulichung einer weiteren Ausgestaltung eines Verfahrens zum Betrieb einer Werkzeugmaschine; und
- Fig. 14:: ein vereinfachtes Blockdiagramm zur Veranschaulichung einer weiteren Ausgestaltung eines Verfahrens zum Betrieb einer Werkzeugmaschine.

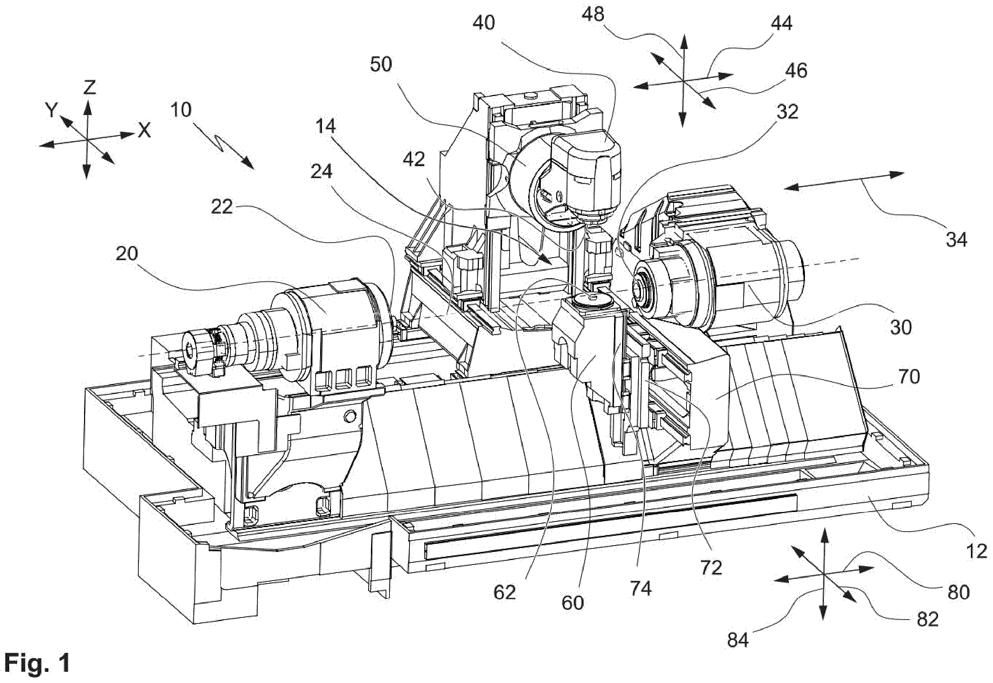

Fig. 1 veranschaulicht anhand einer perspektivischen Darstellung die Grundstruktur einer insgesamt mit 10 bezeichnete Werkzeugmaschine. Fig. 1 zeigt eine Ansicht der Werkzeugmaschine 10 von der Vorderseite (Bedienerseite) her. Die Bezeichnung Vorderseite dient in erster Linie zur Veranschaulichung und ist nicht einschränkend zu verstehen.

In zumindest einigen der Figuren ist aus Veranschaulichungsgründen ein kartesisches Koordinatensystem X-Y-Z dargestellt. Das Koordinatensystem dient zur Veranschaulichung grundlegender Orientierungen und Bewegungsachsen der Werkzeugmaschine 10 sowie von deren Komponenten. Eine mit X bezeichnete Achse kennzeichnet allgemein eine Längserstreckung. Eine mit Y bezeichnete kennzeichnet allgemein eine Tiefenerstreckung. Im Ausführungsbeispiel definieren die Achsen X und Y gemeinsam eine Horizontalebene. Eine mit Z bezeichnete Achse kennzeichnet allgemein eine Höhenerstreckung. Das Koordinatensystem X-Y-Z dient in erster Linie zur Veranschaulichung und ist nicht ihn einschränkender Weise zu verstehen. Es versteht sich, dass auch andere Koordinatensysteme zur Beschreibung der Werkzeugmaschine 10 und deren Komponenten nutzbar sind. Der Fachmann kann entsprechende Transformationen vornehmen.

Die Werkzeugmaschine 10 weist ein Gestell 12 auf, das auch als Maschinengestell oder Maschinenbett bezeichnet werden kann. Das Gestell 12 trägt weitere Komponenten der Werkzeugmaschine 10 und stützt diese am Boden ab. Die Werkzeugmaschine 10 umfasst einen Arbeitsraum 14, in dem Werkstücke bearbeitet werden können, insbesondere durch spanabhebende Bearbeitung. Üblicherweise ist der Arbeitsraum 14 durch eine Einhausung (in Fig. 1 nicht explizit gezeigt) von der Umgebung abgeschirmt. Ferner weisen Werkzeugmaschine 10 üblicherweise Steuereinheiten und dergleichen zur Steuerung der diversen Antriebe und sonstiger Funktionen auf.

Die Werkzeugmaschine 10 umfasst eine Werkstückspindel 20, die im Ausführungsbeispiel am Gestell 12 festgelegt ist. Die Werkstückspindel 20 trägt einen Werkstückhalter 22, der zur Aufnahme eines Werkstücks (nicht dargestellt) ausgebildet ist. Die Werkstückspindel 20 ist dazu ausgebildet, ein im Werkstückhalter 22 gehaltenes Werkstück um eine Längsachse 24 rotatorisch anzutreiben. Die Längsachse 24 ist im Ausführungsbeispiel horizontal orientiert und parallel zur X-Richtung. Die Werkstückspindel 20 kann auch als primäre Werkstückspindel 20 bezeichnet werden.

Im Ausführungsbeispiel weist die Werkzeugmaschine 10 neben der Werkstückspindel 20 eine weitere, gegenüberliegende Werkstückspindel 30 auf. Die Werkstückspindel 30 kann auch als Gegenspindel bezeichnet werden. Die Werkstückspindel 30 weist einen Werkstückhalter 32 auf. Die Werkstückspindeln 20, 30 sind konzentrisch zueinander orientiert. Im Ausführungsbeispiel kann die Werkstückspindel 30 entlang des Gestells 12 in der X-Richtung relativ zur Werkstückspindel 20 verfahren werden (vergleiche den Doppelpfeil 34). Die Werkstückspindeln 20, 30 können gemeinsam stangenartige Werkstücke aufnehmen und antreiben.

Es versteht sich, dass die Werkzeugmaschine 10 auch andere Konfigurationen aufweisen kann. Dies kann einen Reitstock statt einer Gegenspindel 30 umfassen. Ferner ist es auch vorstellbar, mit der Werkstückspindel 20 Werkstücke ohne zusätzliche Abstützung einseitig zu halten und zu führen, sofern das Längen-DurchmesserVerhältnis nicht zu groß wird. Dies bietet sich beispielsweise für Flanschteile, Futterteile und dergleichen an. Zur Bearbeitung von stangenartigen Werkstücken kann die Werkzeugmaschine 10 mit einem Stangenlader gekoppelt werden. Dies ist nicht einschränkend zu verstehen.

Zur Bearbeitung der Werkstücke weist die Werkzeugmaschine 10 eine Werkzeugspindel 40 auf. Die Werkzeugspindel 40 umfasst einen Werkzeughalter 42 zur Aufnahme eines angetriebenen oder feststehenden Werkzeugs. Über eine entsprechende Kinematik ist die Werkzeugspindel 40 im Ausführungsbeispiel entlang dreier translatorischer Achsen 44, 46, 48 relativ zum Gestell 12 und folglich relativ zu einem eingespannten Werkstück verfahrbar. Die erste Achse 44 ist parallel zur X-Achse. Die zweite Achse 46 ist parallel zur Y-Achse. Die dritte Achse 48 ist parallel zur Z-Achse. Die erste Achse 44 und die zweite Achse 46 bilden eine Horizontalebene. Die dritte Achse 48 ist vertikal orientiert.

Im Ausführungsbeispiel gemäß Fig. 1 weist die Werkzeugspindel 40 ferner einen Schwenkantrieb 50 auf, der Schwenkbewegungen um die zweite Achse 46 erlaubt. Eine solche Schwenkachse kann auch als B-Achse bezeichnet werden. Gleichwohl kann die Werkzeugspindel 40 als hängende Werkzeugspindel mit hängendem Werkzeug bezeichnet werden, zumindest in der in Fig. 1 gezeigten Normalorientierung. In der Normalorientierung ist die Werkzeugspindel 40 oberhalb der Längsachse 24 angeordnet.

Zusätzlich zur Werkzeugspindel 40 weist die in den Fig. 1 gezeigte Werkzeugmaschine 10 eine weitere Werkzeugspindel 60 mit einem Werkzeughalter 62 auf. In der in den Figuren 1 gezeigten Normalorientierung ist die Werkzeugspindel 60 unterhalb der Längsachse 24 angeordnet. Die Werkzeugspindeln 40 und 60 sind in Bezug auf die Längsachse 24 einander gegenüberliegend angeordnet. In der Normalorientierung ist die Werkzeugspindel 60 unterhalb der Längsachse 24 angeordnet.

In beispielhaften Ausgestaltungen kann die Werkzeugspindel 60 als Überkopfspindel oder als (aufrecht) stehende Werkzeugspindel bezeichnet werden. In beispielhaften Ausgestaltungen dient die Werkzeugspindel 40 als primäre Werkzeugspindel. Demgemäß kann die Werkzeugspindel 60 als sekundäre Werkzeugspindel dienen. Es versteht sich, dass zumindest bei bestimmten Bearbeitungsaufgaben auch die Werkzeugspindel 60 primäre Funktionen übernehmen kann.

Die Werkzeugspindel 60 ist mittelbar über einen ersten Schlitten 70 entlang einer ersten Achse 80 relativ zum Gestell 12 verfahrbar. Der erste Schlitten 70 trägt einen relativ zum ersten Schlitten 70 entlang einer zweiten Achse 82 verfahrbaren zweiten Schlitten 72. Der zweite Schlitten 72 trägt einen relativ zum zweiten Schlitten 72 entlang einer dritten Achse 84 verfahrbaren dritten Schlitten 74. Am dritten Schlitten 74 ist die Werkzeugspindel 60 angeordnet. Die erste Achse 80 ist parallel zur X-Achse. Der erste Schlitten 70 kann auch als X-Schlitten bezeichnet werden. Die zweite Achse 82 ist parallel zur Y-Achse. Der zweite Schlitten 72 kann auch als Y-Schlitten bezeichnet werden. Die dritte Achse 84 ist parallel zur Z-Achse. Der dritte Schlitten 74 kann auch als Z-Schlitten bezeichnet werden.

Mit anderen Worten ist die Werkzeugspindel 60 in drei Achsen 80, 82, 84 relativ zum Gestell 12 und folglich relativ zu einem eingespannten Werkstück verfahrbar. In der Werkzeugaufnahme 62 kann die Werkzeugspindel 60 ein Werkzeug in einer aufrechten Position aufnehmen und bedarfsweise um eine Spindelachse antreiben. Die Werkzeugspindel 60 ist zur Aufnahme angetriebener Werkzeuge und nicht angetriebener (feststehender) Werkzeuge ausgebildet. Die Werkzeugspindel 60 kann auch sogenannte Winkelköpfe aufnehmen und beispielsweise auf Basis der vertikalen Orientierung der Werkzeugspindel 60 ein horizontal orientiertes Werkzeug bereitstellen.

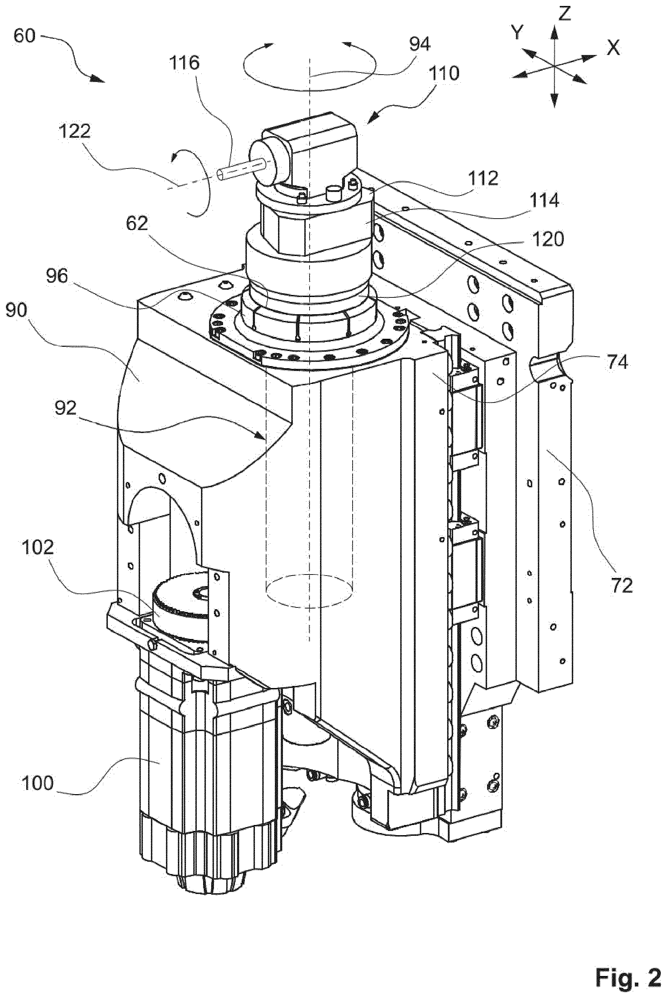

Fig. 2 veranschaulicht anhand einer perspektivischen Darstellung eine Ausgestaltung einer Werkzeugspindel 60, die bei der Werkzeugmaschine 10 als sekundäre Werkzeugspindel, aber auch bei anderen Gestaltungen von Werkzeugmaschinen verwendbar ist. Die Werkzeugspindel 60 ist als stehende Spindel (auch: Überkopfspindel) gestaltet. Die Werkstückspindel 60 weist ein Spindelgehäuse 90 auf, das im Ausführungsbeispiel über die Schlitten 72, 74 beispielsweise am Schlitten 70 gemäß Fig. 1 aufnehmbar ist, um die Werkzeugspindel 60 in drei Achsen 80, 82 und 84 verfahren zu können. Andere Konfigurationen sind vorstellbar.

Das Spindelgehäuse 90 beherbergt eine Spindeleinheit 92, deren Längsachse 94 in der in Fig. 2 gezeigten Stellung vertikal orientiert ist. Im Ausführungsbeispiel sitzt am oberen Ende der Spindeleinheit 92 der Werkzeughalter 62, den eine Spannkappe 96 umgibt. Die Spannkappe 96 ist am Spindelgehäuse 90 festgelegt. Die Werkzeugspindel 60 weist im Ausführungsbeispiel gemäß Fig. 2 einen Antrieb 100 auf, der über ein Zugmittel 102 (Zahnriemen oder dergleichen) mit der Spindeleinheit 92 gekoppelt ist, um den Werkzeughalter 62 um die Längsachse 94 rotatorisch anzutreiben. Es versteht sich, dass die Spindeleinheit 92 grundsätzlich auch als Motorspindel mit integriertem Motor gestaltet sein kann.

Am Werkzeughalter 62 ist im Ausführungsbeispiel eine Werkzeugeinheit 110 aufgenommen, die als Winkelkopf 112 gestaltet ist. Die Werkzeugeinheit 110 weist ein Kopfgehäuse 114 auf, das eine Umlenkung bereitstellt. Das Kopfgehäuse 114 kann auch als Umlenkgehäuse bezeichnet werden. Am Kopfgehäuse 114 ist ein (angetriebenes) Werkzeug 116 aufgenommen, beispielsweise ein Bohrer oder Fräser. Die Werkzeugeinheit 110 umfasst ferner einen Abdecktopf 120, über den bedarfsweise das Kopfgehäuse 114 drehfest am Spindelgehäuse 90 festgelegt werden kann. In einem solchen Zustand kann die Spindeleinheit 92 genutzt werden, um das Werkzeug 116 um seine (gegenüber der Längsachse 94 geneigte) Rotationsachse 122 rotatorisch anzutreiben. Zusätzlich kann die Spindeleinheit 92 auch für eine Positionierbewegung des Winkelkopfes 112 genutzt werden, dies wird in Zusammenhang mit anderen Figuren näher erläutert.

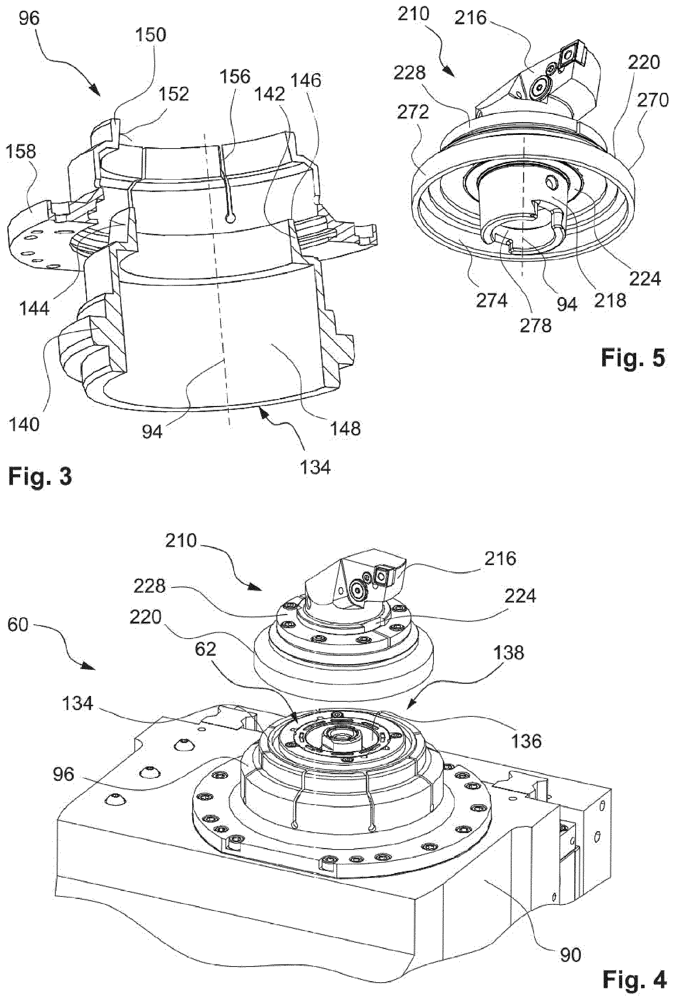

Die Figuren 3, 4 und 5 veranschaulichen gemeinsam die Gestaltung eines Klemmmechanismus der Werkzeugspindel 60, der neben der Spannkappe 96 eine axial entlang der Längsachse 94 verfahrbare Betätigungshülse 134 umfasst, vergleiche hierzu Fig. 3 und Fig. 4. Fig. 4 und Fig. 5 veranschaulichen zusätzlich eine mit 210 bezeichnete Werkzeugeinheit, die am Werkstückhalter 62 der Werkzeugspindel 60 aufnehmbar ist. Die Werkzeugspindel 60 ist also für verschiedenartige Werkzeugeinheiten 110, 210 geeignet.

In Fig. 3 sind die Betätigungshülse 134 und die Spannkappe 96 teilweise geschnitten und teilweise explodiert dargestellt. Aus Fig. 4 wird ersichtlich, dass die Spannkappe 96 und die Betätigungshülse 134 ein der Werkzeugeinheit 210 zugewandtes Ende der Spindeleinheit 92 umgeben, bei dem der Werkzeughalter 62 ausgebildet ist. Der Werkzeughalter 62 umfasst eine Werkzeugaufnahme 136, die die Werkzeugeinheit 210 einführbar ist. Beim Werkzeughalter 62 ist eine Stirnseite 138 der Spindeleinheit 92 ausgebildet.

Zumindest die Spannkappe 96 ist drehfest am Spindelgehäuse 90 festgelegt. Gegebenenfalls gilt dies auch für die Betätigungshülse 134. Die Betätigungshülse 134 umfasst einen als Kolben oder Ringkolben 140 gestalteten Abschnitt, der im montierten Zustand vom Spindelgehäuse 90 verdeckt ist. Ferner weist die Betätigungshülse 134 an ihrem der Werkzeugeinheit 210 zugewandten Ende einen Betätigungsabschnitt 142 auf, der an seinem Umfang eine Konusfläche 144 sowie an seinem Ende eine Stirn 146 ausbildet. Mit der Konusfläche 144 kann die Betätigungshülse 134 auf die Spannkappe 96 einwirken. Zumindest in beispielhaften Ausgestaltungen kann auch die Stirn 146 des Betätigungsabschnitts 142 genutzt werden, um auf eine Werkzeugeinheit einzuwirken, die am Werkzeughalter 62 aufgenommen ist. Die Betätigungshülse 134 weist in ihrem Innenraum 148 einen Durchlass für die Spindeleinheit 92 und deren Werkzeugaufnahme 136 auf. Die Spindeleinheit 92 kann mit der Werkzeugaufnahme 136 und der Stirnseite 138 den Innenraum 148 der Betätigungshülse 134 durchragen.

Die Spannkappe 96 weist einen auslenkbaren Spannabschnitt 150 auf, der vom Betätigungsabschnitt 142 der Betätigungshülse 134 kontaktierbar ist. Im Ausführungsbeispiel umfasst der Spannabschnitt 150 eine an seinem Innenumfang eine Konusfläche 152. Die Konusfläche 144 der Betätigungshülse 134 kann die Konusfläche 152 der Spannkappe 96 kontaktieren, um den Spannabschnitt 150 auszulenken. Die Spannkappe 96 ist zumindest im Bereich des Spannabschnitts 150 mit Schlitzen 156 versehen. Auf diese Weise wird der Spannabschnitt 150 segmentiert und leichter auslenkbar. Die Spannkappe 96 umfasst ferner einen umlaufenden Kragen 158, der zur Befestigung am Spindelgehäuse 90 dient. Eine axiale Verschiebung der Betätigungshülse 134 zwischen einer Entlastungsstellung und einer Spannstellung sorgt für eine Auslenkung (und Rücckehr) des Spannabschnitts 150.

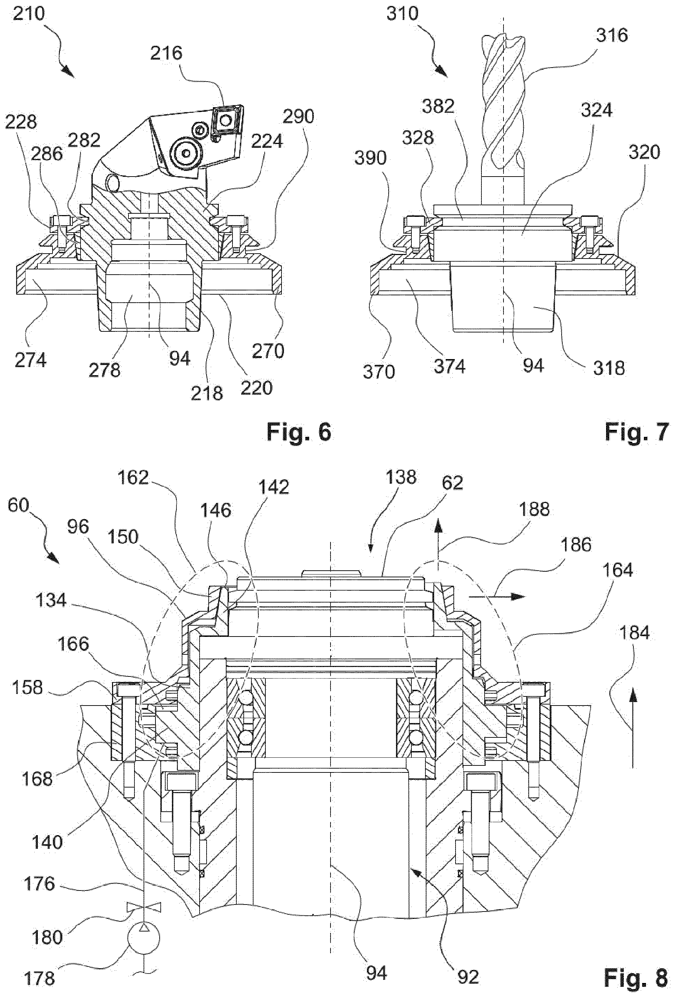

Fig. 5 veranschaulicht die bereits in Fig. 4 gezeigt Werkzeugeinheit 210 in einer abweichenden Orientierung. Ergänzend wird auf die Schnittdarstellung der Werkzeugeinheit 210 in Fig. 6 verwiesen. Die Werkzeugeinheit 210 trägt ein stehendes Werkzeug 216, das als Drehwerkzeug gestaltet ist. Ferner umfasst die Werkzeugeinheit 210 einen Kegelabschnitt 218, der zum Einführen in die und zur Aufnahme in der Werkzeugaufnahme 136 des Werkzeughalters 62 dient. Die Werkzeugeinheit 210 umfasst ferner einen Abdecktopf 220, der im montierten Zustand die Stirnseite 138 der Spindeleinheit 92 und die Spannkappe 96, insbesondere deren Spannabschnitt 150, zumindest teilweise überdeckt. Auf diese Weise ist die Stirnseite 138 gut gegen einen Späneeintrag (Spänefall) oder sonstige Verschmutzungen geschützt. Dies ist insbesondere bei stehenden Werkzeugspindeln 60 vorteilhaft. Zwischen dem Kegelabschnitt 218 und dem Werkzeug 216 ist eine Basis 224 ausgebildet. Die Basis 224 trägt den Abdecktopf 220. Im Ausführungsbeispiel gemäß den Figuren 4 und 5 sind die Basis 224, der Abdecktopf 220 und der Kegelabschnitt 218 zumindest teilweise konzentrisch zur Längsachse 94 ausgerichtet.

Der Abdecktopf 220 ist über eine Verbindungsscheibe 228 drehfest mit der Basis 224 der Werkzeugeinheit 210 gekoppelt. Die Verbindungscheibe 228 ist im Ausführungsbeispiel als geteilte Scheibe gestaltet, vergleiche Fig. 4. Der Abdecktopf 220 weist einen Rand 270 auf, der sich in Richtung auf den Werkzeughalter 62 erstreckt. Der Rand 270 ist im Ausführungsbeispiel als Zylinderabschnitt 272 gestaltet. Der Rand 270 bildet einen Klemmabschnitt 274 aus, der vom auslenkbaren Spannabschnitt 150 der Spannkappe 96 kontaktiert werden kann, um den Abdecktopf 220 und damit die Werkzeugeinheit 210 drehfest am Spindelgehäuse 90 festzulegen. Im Ausführungsbeispiel wird der Klemmabschnitt 274 insbesondere durch eine umlaufende Innenfläche des Zylinderabschnitts 272 gebildet.

Der Kegelabschnitt 218 ist im Ausführungsbeispiel als Hohlschaftkegel 278 gestaltet. Die Basis 224 ist zwischen dem Hohlschaftkegel 278 und dem Werkzeug 216 ausgebildet. Die Basis 224 weist eine umlaufende Nut 282 auf, die bei Nichtvorhandensein des Abdecktopfes 220 als Handhabungsnut dienen kann, vergleiche Fig. 6. Die Nut 282 dient jedoch zur drehfesten Ankopplung des Abdecktopfes 220. Zu diesem Zweck ist die (geteilte) Verbindungsscheibe 228 in die Nut 282 eingeführt. Die Verbindungscheibe 228 zieht den Abdecktopf 220 gegen einen konisch gestalteten Klemmring 286. Im Ausführungsbeispiel dienen hierzu mehrere Schaubverbindungen. Der Klemmring 286 und der Abdecktopf 220 weisen aneinander angepasste Konusflächen auf. Der Klemmring 286 kann geschlitzt sein. Die Kombination aus Verbindungsscheibe 228 und Abdecktopf 220 erlaubt die Nutzung konventioneller Werkzeuge mit einer Basis 224, die eine umlaufende Nut 282 aufweist. Da die Nut 282 zur Befestigung des Abdecktopfes 22 dient, scheidet eine Verwendung zu Handhabungszwecken bei der Werkzeugeinheit 210 aus. Daher weist der Abdecktopf 220 seinerseits eine umlaufende Handhabungsnut 290 auf, die mit Handhabungstechnik und dergleichen greifbar ist. Auf diese Weise kann die Werkzeugeinheit 210 automatisiert gewechselt und vorrätig gehalten werden.

Der Abdecktopf 220 dient einerseits zur Abdeckung bzw. zum Schutz der Stirnseite 138 der Spindeleinheit 92. Ferner kann die Werkzeugeinheit 210 über den Abdecktopf 220 am Spindelgehäuse 90 drehfest fixiert werden, wenn die Spannkappe 96 durch die Betätigungshülse 134 ausgelenkt und mit dem Abdecktopf 220 geklemmt wird. Auf diese Weise wird ein Klemmmechanismus geschaffen, der beispielsweise Werkzeugeinheiten 210 mit feststehenden Werkzeugen 216 fest und hochsteif an der Werkzeugspindel 60 fixieren kann.

Die Werkzeugspindel 60 eignet sich jedoch auch zur Aufnahme von Werkzeugeinheiten mit rotierbaren Werkzeugen. Eine solche Werkzeugeinheit 310 wird in Fig. 7 veranschaulicht. Die Werkzeugeinheit 310 trägt ein rotierbares Werkzeug 316, das als Bohrer oder Fräser gestaltet ist. Die Werkzeugeinheit 310 umfasst einen Kegelabschnitt 318 zur Aufnahme an der Werkzeugaufnahme 136 des Werkzeughalters 62, vergleiche Fig. 4. Ferner ist ein Abdecktopf 320 vorgesehen, der an einer Basis 324 der Werkzeugeinheit 310 drehfest festgelegt ist. Das Werkzeug 316 kann im montierten Zustand der Werkzeugeinheit 310 durch die Spindeleinheit 92 um die Längsachse 94 rotatorisch angetrieben werden.

Am Abdecktopf 320 ist ein Rand 370 ausgebildet, der einen Klemmabschnitt 374 trägt. Im montierten Zustand deckt der Rand 370 die Stirnseite 138 der Spindeleinheit 92 und den Spannabschnitt 150 der Spannkappe 96 zumindest teilweise ab. Auf diese Weise ist auch bei der Werkzeugeinheit 310 eine Schutzwirkung gegeben. Im Ausführungsbeispiel gemäß Fig. 7 ist der Abdecktopf 320 über eine Verbindungsscheibe 328 mit einer Nut 382 an der Basis 324 gekoppelt. Am Abdecktopf einer 20 ist ferner eine umlaufende Handhabungsnut 390 ausgebildet.

Zur Bearbeitung eines Werkstücks mit der Werkzeugeinheit 310 muss eine freie Rotierbarkeit des Werkzeugs 316 um die Längsachse 94 gegeben sein. Daher wird die Werkzeugeinheit 310 nicht analog zur Werkzeugeinheit 210 vollständig drehfest am Spindelgehäuse 90 fixiert. Zumindest der Kegelabschnitt 318, die Basis 324 und das daran aufgenommene Werkzeug 316 müssen sich gemeinsam mit der Spindeleinheit 92 um die Längsachse 94 rotieren können. Dies kann bewirkt werden, indem eine Drehmitnahme zwischen dem Abdecktopf 320 und der Spannkappe 96 unterbleibt, oder indem eine Drehmitnahme zwischen dem Abdecktopf 320 und der Basis 324 unterbleibt.

Eine denkbare Lösung besteht darin, den Spannabschnitt 150 der Spannkappe 96 bewusst nicht durch die Betätigungshülse 134 auszulenken, wenn eine Werkzeugeinheit 310 mit angetriebenem Werkzeug 116 montiert ist. Eine alternative Lösung besteht darin, die Abmessungen bzw. den Durchmesser des Klemmabschnitts 374 so zu wählen, dass auch bei vollständig ausgelenktem Spannabschnitt 150 der Spannkappe 96 keine Verbindung zwischen dem Abdecktopf 320 und der Spannkappe 96 besteht. Eine alternative Lösung besteht darin, bewusst eine Verdrehbarkeit zwischen dem Abdecktopf 320 und der Nut 382 der Basis 324 herbeizuführen. Grundsätzlich ist ein enger Spalt zwischen dem Abdecktopf 320 und der Spannkappe 96 gewünscht, um das Eindringen von Fremdkörpern zu minimieren.

Fig. 8 zeigt eine geschnittene Teilansicht durch die Werkzeugspindel 60 im Bereich ihres der Stirnseite 138 benachbarten Endes. Die Spindeleinheit 92 erstreckt sich durch die Betätigungshülse 134 und die Spannkappe 96 hindurch. Der Werkzeughalter 62 ist über die Stirnseite 138 für Werkzeugeinheiten 110, 210, 310 zugänglich. Ein jeweiliger Abdecktopf 120, 220, 320 schützt den in Fig. 8 nach oben teilweise geöffneten Bereich der Spindeleinheit 92. In einer beispielhaften Ausgestaltung ist die Betätigungshülse 134 teilweise beschichtet oder vulkanisiert, um das Eindringen von Fremdkörpern zu verhindern. Dies gilt beispielsweise für den mit Schlitzen 156 versehenen Bereich, vergleiche Fig. 3.

Der Ringkolben 140 der Betätigungshülse 134 (vergleiche wiederum Fig. 3) ist axial verschieblich entlang der Längsachse 94 in einem Verdrängungsraum 166 angeordnet. Der Verdrängungsraum 166 kann auch als Zylinderraum oder Ringzylinderraum bezeichnet werden. Im Ausführungsbeispiel gemäß Fig. 8 wird der Verdrängungsraum 166 durch die Spannkappe 96, insbesondere deren Kragen 158, einen ebenso am Spindelgehäuse 90 festgelegten Basisring 168, sowie durch Bereiche der Betätigungshülse 134 begrenzt, die dem Ringkolben 140 benachbart sind.

Die Darstellung in Fig. 8 veranschaulicht zwei Stellungen/Zustände der Betätigungshülse 134. Ein mit 162 bezeichneter, hervorgehobener Bereich veranschaulicht eine Entlastungsstellung. Ein mit 164 bezeichneter, hervorgehobener Bereich veranschaulicht eine Spannstellung.

Im Ausführungsbeispiel gemäß Fig. 8 koppelt eine Fluidleitung 176 fluidisch an den Verdrängungsraum 166 an. Über die Fluidleitung 176 kann ein mit einem Druckerzeuger 178 bereitgestelltes Druckmittel in den Verdrängungsraum 166 eingeleitet werden. Zu Steuerungszwecken ist ein Ventil 180 vorgesehen. Auf diese Weise kann der Ringkolben 140 im Verdrehungsraum 158 und damit die Betätigungshülse 134 entlang der Längsachse 94 bewegt werden. Es versteht sich, dass die Fluidleitung 176, der Druckerzeuger 178 und das Ventil 180 lediglich schematisch zu Veranschaulichungszwecken dargestellt sind. Eine Rückstellbewegung kann in ähnlicher Weise durch eine spiegelbildliche fluidische Anordnung erzeugt werden, die an der gegenüberliegenden Seite an den Verdrängungsraum 166 ankoppelt. Alternativ kann die Rückstellbewegung mit Federn oder ähnlichen Energiespeichern eingeleitet werden. Eine Rückstellbewegung kann auch eingeleitet werden, in dem über die Fluidleitung 176 ein Unterdruck im Verdrängungsraum 166 erzeugt wird.

Bei der Bewegung der Betätigungshülse 134 vergleiche einen mit 184 bezeichneten Pfeil in Fig. 8) aus der der Entlastungsstellung (Bezugszeichen 162) in die Spannstellung (Bezugszeichen 164) wirkt der Betätigungsabschnitt 142 auf den Spannabschnitt 150 der Spannkappe 96 ein und drängt diesen (im Ausführungsbeispiel radial) nach außen. Dies wird durch einen mit 186 bezeichneten Pfeil veranschaulicht. Sodann kann der Spannabschnitt 150 (im Ausführungsbeispiel radial) auf den Abdecktopf 120, 220, 320 einwirken und beispielsweise den Klemmabschnitt 274 (vergleiche Fig. 6) fest mit dem Spindelgehäuse 90 verbinden.

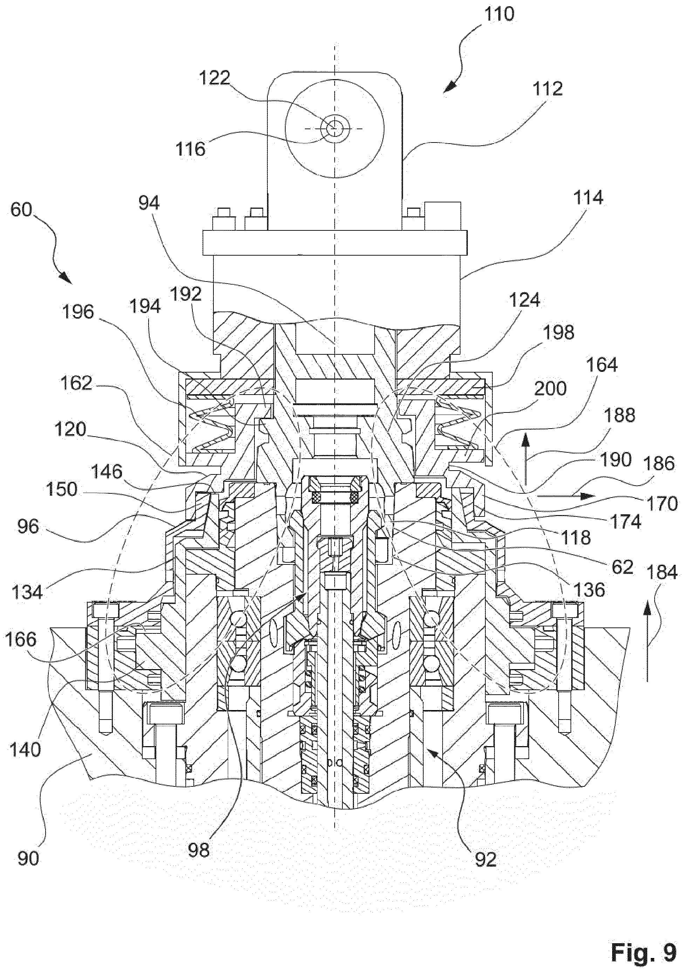

Zusätzlich führt jedoch die Bewegung 184 zu einer axialen Bewegung der Stirn 146 des Betätigungsabschnitts 142 der Betätigungshülse 134, vergleiche einen mit 188 bezeichneten Pfeil. Daher kann auch die Bewegung der Stirn 146 zur Steuerung einer an der Werkzeugspindel 60 aufgenommenen Werkzeugeinheit genutzt werden. Dies wird mit zusätzlicher Bezugnahme auf Fig. 9 veranschaulicht.

Fig. 9 zeigt ähnlich wie Fig. 8 einem stirnseitigen Abschnitt der Werkzeugspindel 60, wobei in Fig. 9 zusätzlich die bereits in Fig. 2 gezeigte Werkzeugeinheit 110 am Werkzeughalter 62 festgelegt ist. In der Ansicht gemäß Fig. 9 ist die Rotationsachse 122 des Werkzeugs 116 des Winkelkopfes 112 senkrecht zur Ansichtsebene orientiert.

Die Schnittansicht gemäß Fig. 9 veranschaulicht ferner eine Hohlschaftkegel-Spanneinheit 98 der Spindeleinheit 92, die den Kegelabschnitt 118 der Werkzeugeinheit 110 greifen und an der Spindeleinheit 92 fixieren kann. Der Kegelabschnitt 118 kann in die Werkzeugaufnahme 136 einrücken. Auf diese Weise kann eine Drehbewegung der Spindeleinheit 92 um die Längsachse 94 auf den Kegelabschnitt 118 übertragen, innerhalb des Kopfgehäuses 114 umgelenkt und auf das Werkzeug 116 übertragen werden. Mit anderen Worten weist der Winkelkopf 112 keinen integrierten Antrieb auf, der zusätzlich zum Antrieb 100 (vergleiche Fig. 2) der Spindeleinheit 92 vorgesehen ist.

Die Spindeleinheit 92 kann einerseits (in der Entlastungsstellung 162 der Betätigungshülse 134) das Werkzeug 116 antreiben und andererseits (in der Spannstellung 164 der Betätigungshülse 134) das Kopfgehäuse 114 des Winkelkopfes 112 um die Längsachse 94 drehen, um die Werkzeugeinheit 110 in einer gewünschten Drehorientierung zu positionieren. In der Entlastungsstellung 162 besteht kein direkter Kontakt zwischen dem Rand 170 des Abdecktopfes 120 und dem Spannabschnitt 150 der Spannkappe 96. Der Abdecktopf 120 kann sich relativ zum Spindelgehäuse 90 um die Längsachse 94 drehen. Die Entlastungsstellung 162 kann auch als erste Stellung des Abdecktopfes 120 bezeichnet werden. Die Spannstellung 164 kann auch als zweite Stellung des Abdecktopfes 120 bezeichnet werden.

Der Abdecktopf 120 ist jedoch bei einer Auflage 192 mit einem Mitnehmer 194 zur Drehmitnahme gekoppelt. Der Mitnehmer 194 ist an der Basis 124 ausgebildet. Wenn also in der Entlastungsstellung 162 die Spindeleinheit 92 den Kegelabschnitt 118 und folglich die Basis 124 der Werkzeugeinheit 110 rotiert, wird auch der Abdecktopf 120 rotiert. Der Abdecktopf 120 wird durch ein Vorspannelement 196 vorgespannt, das die Auflage 192 gegen den Mitnehmer 194 drückt. Das Vorspannelement 196 ist im Ausführungsbeispiel als Feder oder Balgfeder gestaltet. Das Vorspannelement 196 stützt sich zwischen einer dem Kopfgehäuse 114 zugeordneten Scheibe 198 und einem Kragen 200 des Abdecktopfes 120 ab. Die Bewegung des Abdecktopfes 120 überträgt sich auf das Kopfgehäuse 114. Daher kann der gesamte Winkelkopf 112 in der Entlastungsstellung 162 um die Längsachse 94 rotiert und positioniert werden.

In der Spannstellung 164 ist die Betätigungshülse 134 axial in Richtung auf die Werkzeugeinheit 110 bewegt, vergleiche den mit 184 bezeichneten Pfeil. Diese Bewegung kann durch eine Hubbewegung des Ringkolben 140 im Verdrängungsraum 166 bewirkt werden.

Wie bereits in Zusammenhang mit Fig. 8 veranschaulicht, drängt der Betätigungsabschnitt 142 den auslenkbaren Spannabschnitt 150 der Spannkappe 96 nach außen, in Richtung auf einen Klemmabschnitt 174 des Rands 170, vergleiche den Pfeil 186. Damit kann die Spannkappe 96 den Abdecktopf 120 greifen und drehfest mit dem Spindelgehäuse 90 verbinden. Zusätzlich wird jedoch auch die Stirn 146 des Betätigungsabschnitts 142 axial bewegt, vergleiche den Pfeil 188. Die Stirn 146 kann nun in der Spannstellung 164 innerhalb des Rands 170 an den Abdecktopf 120 angreifen, um den Abdecktopf 120 axial zu verfahren. Damit vollzieht der Abdecktopf 120 eine Hubbewegung. Die Hubbewegung sorgt dafür, dass die Auflage 192 vom Mitnehmer 194 der Basis 124 abheben kann. Auf diese Weise wird die Drehmitnahme des Abdecktopfes 120 durch die Basis 124 unterbrochen.

In der Spannstellung 164 ist damit der Abdecktopf 120 und das Kopfgehäuse 114 des Winkelkopfes 112 drehfest am Spindelgehäuse 90 festgelegt. Die Spindeleinheit 92 kann durch das Kopfgehäuse 114 hindurch das Werkzeug 116 der Werkzeugeinheit 110 antreiben. Fig. 9 zeigt ferner, dass auch der Abdecktopf 120 der Werkzeugeinheit 110 eine umlaufende Handhabungsnut 190 für Handhabungszwecke aufweist.

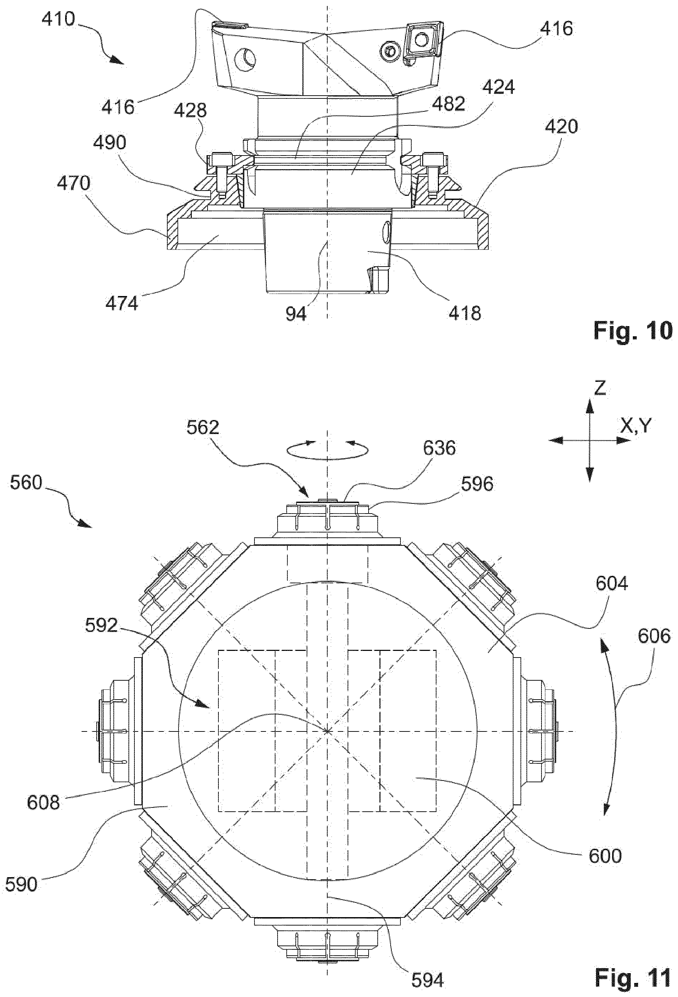

Fig. 10 veranschaulicht in Ergänzung zu den Werkzeugeinheiten 110, 210, 310 eine Werkzeugeinheit 410. Die Werkzeugeinheit 410 ist ähnlich wie die Werkzeugeinheit 210 mit feststehenden Werkzeugen 416 versehen. Die Werkzeugeinheit 410 weist jedoch zwei oder mehr feststehende Werkzeuge 416 auf, die um die Längsachse 94 verteilt sind. Die Werkzeugeinheit 416 weist in grundsätzlich zuvor schon beschriebener Weise einen Kegelabschnitt 418 und einen Abdecktopf 420 auf. Ferner ist eine Basis 424 vorgesehen, die zwischen den Werkzeugen 416 und dem Kegelabschnitt 418 angeordnet ist, wobei die Basis 424 auch den Abdecktopf 420 trägt. Der Abdecktopf 420 ist über eine Verbindungsscheibe 428 an einer Nut 482 der Basis 424 festgelegt. Der Abdecktopf 420 weist ferner einen Rand 470 auf, an dem ein Klemmabschnitt 474 ausgebildet ist. Mit der Spindeleinheit 92 der Werkzeugspindel 60 kann die Werkzeugeinheit 410 einerseits positioniert werden, um ein bestimmtes Werkzeug 416 bereitzustellen. Über die Spannkappe 96 kann die Werkzeugeinheit 410 zusätzlich steif und drehfest am Spindelgehäuse 90 festgelegt werden. Eine umlaufende Handhabungsnut 490 ist am Abdecktopf 420 ausgebildet.

Fig. 11 veranschaulicht eine weitere beispielhafte Ausgestaltung einer insgesamt mit 560 bezeichneten Werkzeugspindel. Die Werkzeugspindel 560 dient ebenso wie die Werkzeugspindel 60 gemäß den vorstehenden Figuren 1, 2, 4, 8 und 9 als stehende Werkzeugspindel, vergleiche die (vertikale) Z-Achse des in Fig. 11 gezeigten Koordinatensystems. Die Werkstückspindel 560 weist eine Mehrzahl von Werkzeughaltern 562 auf, die um ein Zentrum 608 verteilt sind. Im Ausführungsbeispiel handelt es sich um acht Werkzeughalter 562, die um jeweils 45° versetzt sind. Ein Spindelgehäuse ist mit 590 bezeichnet. Die Werkzeugspindel 560 ist im Ausführungsbeispiel als Scheibenrevolver mit integrierter Spindeleinheit 592 gestaltet.

Die Spindeleinheit 592 ist hinsichtlich ihrer (stehenden bzw. vertikalen) Orientierung unveränderlich, vergleiche die Längsachse 594 in Fig. 11. Stattdessen kann ein gewählter Werkzeughalter 562 in eine Position gefahren werden, in der ein Antrieb durch einen Antrieb 600 der Spindeleinheit 592 ermöglicht ist. Zu diesem Zweck ist ein drehbarer Kranz 604 vorgesehen, der durch einen Drehmechanismus 606 (in Fig. 11 lediglich durch einen gekrümmten Pfeil angedeutet) um das Zentrum 608 rotiert bzw. getaktet werden kann. Im Ausführungsbeispiel macht eine Drehung um 45% jeweils einen neuen Werkzeughalter 562 verfügbar.

Analog zu den zuvor bereits veranschaulichten Ausführungsbeispielen umfasst die Werkzeugspindel 560 Werkzeughalter 562, die jeweils eine Werkzeugaufnahme 636 bereitstellen. Ferner ist eine Spannkappe 596 zur Aufnahme der Werkzeugeinheiten 110, 210, 310, 410 gemäß den zuvor bereits veranschaulichten Aspekten und Ausgestaltungen vorgesehen. Die Spannkappe 596 ist relativ zum Spindelgehäuse 590 festgelegt, wenn der entsprechende Werkzeughalter 562 in einer Arbeitsposition mit konzentrischer Ausrichtung zur Längsachse 594 ist, in der die Werkzeugaufnahme 636 des Werkzeughalters 562 durch den Antrieb 600 antreibbar ist.

Die Werkzeugspindel 560 erlaubt eine Bevorratung und Bereitstellung einer Mehrzahl von Werkzeugeinheiten 110, 210, 310, 410. Mit anderen Worten kann die Werkzeugspindel 560 als stehende Werkzeugspindel mit integriertem Magazin bezeichnet werden. Der Kranz 604 mit dem Drehmechanismus 606 wird jedoch primär dazu genutzt, einen gewählten Werkzeughalter 562 mit einem daran aufgenommenen Werkzeug in eine Bereitstellungsposition mit stehender Orientierung zu bringen, in der ein Antrieb durch die Spindeleinheit 592 erfolgen kann. Dort kann gemäß den zuvor bereits erläuterten Ausgestaltungen eine Positionierung und/oder Klemmung erfolgen. Auch ein Antrieb angetriebener Werkzeuge ist vorstellbar. Gleichermaßen können auch Winkelköpfe an den Werkzeughaltern 562 aufgenommen und bereitgestellt werden.

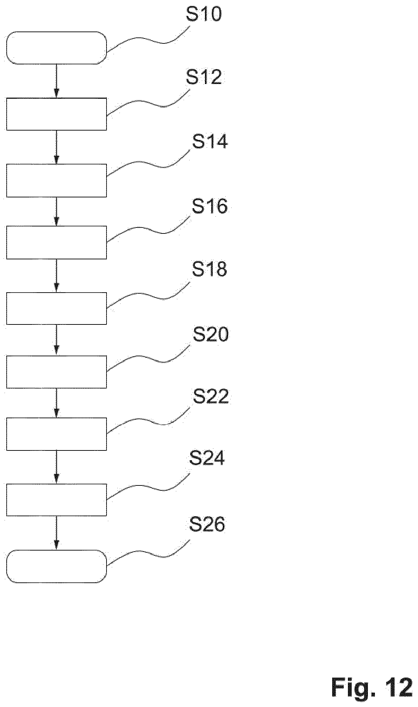

Die Figuren 12-14 veranschaulichen anhand schematischer Blockdiagramme beispielhafte Ausgestaltungen von Verfahren zum Betrieb einer Werkzeugmaschine, die insbesondere mit einer offenbarungsgemäßen Werkzeugspindel versehen ist. Es versteht sich, dass die jeweils gezeigten Verfahrensschritte auch in einem anderen Kontext als Zwischensequenz in einen Bearbeitungsablauf eingebettet sein können.

Das in Fig. 12 veranschaulichte Verfahren beginnt bei einem Schritt S10 und endet bei einem Schritt S26, ohne dass dies einschränkend zu verstehen ist. Ein Schritt S12 bezieht sich auf die Zuführung und Montage einer Werkzeugeinheit in Form eines Winkelkopfes an einem Werkzeughalter der Werkzeugspindel. Dies kann entsprechende Handhabungsschritte umfassen, beispielsweise eine automatisierte Zuführung im Rahmen eines automatisierten Werkzeugwechsels. Hierbei ist es von Vorteil, wenn der Abdecktopf der Werkzeugeinheit eine umlaufende Handhabungsnut aufweist. Der Winkelkopf verfügt über eine geeignete Schnittstelle zur Aufnahme am Werkzeughalter. Der Winkelkopf wird über eine Spanneinheit gespannt, die innerhalb einer rotierbaren Spindeleinheit der Werkzeugspindel angeordnet ist.

In einem Schritt S14 wird sichergestellt, dass eine an einem Spindelgehäuse angeordnete Betätigungshülse in der Entlastungsstellung ist. Dies kann bedarfsweise auch eine Bewegung der Betätigungshülse aus der Spannstellung in die Entlastungsstellung umfassen, zumindest aber eine Kontrolle der aktuellen Position der Betätigungshülse.

In einem nachfolgenden Schritt S16 wird die Spindeleinheit kontrolliert angetrieben, so dass der Winkelkopf gemeinsam mit der Spindeleinheit rotiert. Wenn die Betätigungshülse in der Entlastungsstellung ist, gibt es keinen Kraftschluss (oder Formschluss) zwischen der Betätigungshülse bzw. den durch die Betätigungshülse betätigten Spannabschnitt der Spannkappe und dem Abdecktopf der Werkzeugeinheit. Gleichermaßen gibt es einen Kraftschluss (oder Formschluss) zwischen dem Abdecktopf und einer Basis der Werkzeugeinheit, die über die Spanneinheit der Spindeleinheit drehfest mit der Spindeleinheit gekoppelt ist.

Daher kann in einem folgenden Schritt S18 der gesamte Winkelkopf um eine Längsachse der Spindeleinheit rotiert werden, dies dient zur Positionierung eines vom Winkelkopf getragenen Werkzeugs.

In einem sich anschließenden Schritt S20 wird die Betätigungshülse in die Spannstellung verfahren. Dies kann durch einen fluidischen Antrieb (Kolben-Zylinder-Paarung) erfolgen, auch andere Antriebe sind denkbar. In der Spannstellung drängt die Betätigungshülse mit ihrem Betätigungsabschnitt den Spannabschnitt der Spannkappe nach außen gegen einen Rand des Abdecktopfes. Auf diese Weise gibt es einen Kraftschluss (oder Formschluss) zwischen der Betätigungshülse, der Spannkappe und dem Abdecktopf. Gleichermaßen bewirkt jedoch die Bewegung der Betätigungshülse eine Überwindung des Kraftschluss (oder Formschluss) zwischen dem Abdecktopf und der Basis der Werkzeugeinheit. Dies hat zur Folge, dass der Abdecktopf und damit auch ein Kopfgehäuse des Winkelkopfes drehfest am Spindelgehäuse festgelegt ist. Hingegen kann innerhalb des Winkelkopfes die Basis durch die Spindeleinheit rotiert werden, um das Werkzeug anzutreiben.

In einem nachgelagerten Schritt S24 kann folglich ein Werkstück mit dem an der als Winkelkopf gestalteten Werkzeugeinheit aufgenommenen Werkzeug bearbeitet werden.

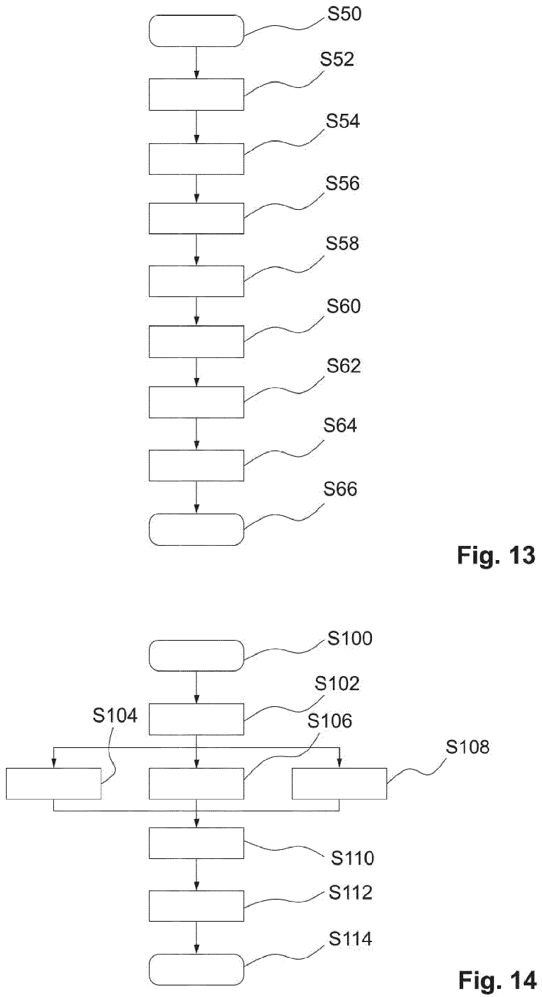

Das in Fig. 13 veranschaulichte Verfahren beginnt bei einem Schritt S50 und endet bei einem Schritt S66, ohne dass dies einschränkend zu verstehen ist.

Der Schritt S52 bezieht sich auf die Zuführung und Montage einer Werkzeugeinheit mit einem feststehenden Werkzeug, beispielsweise einem Drehwerkzeug. Dies kann unter Nutzung einer Handhabungsnut des Abdecktopfes der Werkzeugeinheit erfolgen. Die Werkzeugeinheit wird über die Spanneinheit der Werkzeugspindel gespannt.

In einem Schritt S54 wird sichergestellt, dass eine an einem Spindelgehäuse angeordnete Betätigungshülse in der Entlastungsstellung ist. Dies kann bedarfsweise auch eine Bewegung der Betätigungshülse aus der Spannstellung in die Entlastungsstellung umfassen, zumindest aber eine Kontrolle der aktuellen Position der Betätigungshülse. Dies stellt sicher, dass kein Kraftschluss oder Formschluss zwischen der Spannkappe und dem Abdecktopf der Werkzeugeinheit besteht.

In einem nachfolgenden Schritt S56 wird die Spindeleinheit kontrolliert angetrieben, so dass die Werkzeugeinheit in einem weiteren Schritt S58 gemeinsam mit der Spindeleinheit in eine gewünschte Drehposition in Bezug auf die Längsachse der Spindeleinheit bewegt wird. Auf diese Weise kann das feststehende Werkzeug positioniert werden. Es ist auch vorstellbar, Spindeleinheiten mit mehreren feststehenden Werkzeugen zu verwenden, wobei die Werkzeuge um einen Umfang der Spindeleinheit verteilt sind. Auf diese Weise kann gezielt ein gewünschtes Werkzeug ausgewählt und in eine Bearbeitungsposition verbracht werden.

In einem nachfolgenden Schritt S60 wird die Betätigungshülse in die Spannstellung verfahren. In der Spannstellung ist ein Kraftschluss oder Formschluss zwischen der Betätigungshülse, der Spannkappe und dem Abdecktopf hergestellt. Auf diese Weise ist die die Werkzeugeinheit drehfest und hochsteif am Spindelgehäuse befestigt.

In einem nachfolgenden Schritt S62 wird ein zu bearbeitendes Werkstück angetrieben, beispielsweise durch eine rotatorische Bewegung um eine Längsachse einer Werkstückspindel. Auf diese Weise kann eine Schnittbewegung erzeugt werden, so dass sich in einem Schritt S64 die Bearbeitung des Werkstücks mit dem feststehenden Werkzeug anschließen kann.

Es versteht sich, dass der Begriff feststehendes Werkzeug nicht ausschließt, dass das Werkzeug in verschiedenen Achsen bewegt wird, vergleiche etwa eine Zustellbewegung oder eine Vorschubbewegung. Ein feststehendes Werkzeug wird jedoch nicht ähnlich einem Bohrer oder Fräser rotatorisch um eine Längsachse angetrieben, um ein üblicherweise stehendes Werkstück zu bearbeiten. Die Schnittbewegung wird üblicherweise durch eine Bewegung des Werkstücks erzeugt.

Hingegen wird ein angetriebenes (rotierendes) Werkzeug für Bearbeitungszwecke um seine Längsachse oder Rotationsachse angetrieben, um ein Werkstück zu bearbeiten. Die Schnittbewegung wird also durch eine Bewegung des Werkzeugs selbst erzeugt. Es versteht sich, dass die Schnittbewegung üblicherweise durch andere Bewegungen überlagert wird, etwa durch Vorschubbewegungen und Zustellbewegungen.

Das in Fig. 14 veranschaulichte Verfahren beginnt bei einem Schritt S100 und endet bei einem Schritt S114, ohne dass dies einschränkend zu verstehen ist.

In einem Schritt S102 wird eine Werkzeugeinheiten mit einem angetriebenen Werkzeug bereitgestellt und montiert. Zu diesen Zwecken kann eine Handhabungsnut des Abdecktopfes der Werkzeugeinheit genutzt werden. Das Werkzeug ist beispielsweise ein Bohrer oder Fräser. Die Werkzeugeinheit wird durch eine Spanneinheit der Spindeleinheit an der Spindeleinheit festgelegt. Auf diese Weise kann die Werkzeugeinheit mitsamt dem angetriebenen Werkzeug durch die Spindeleinheit rotatorisch um die Längsachse der Spindel angetrieben werden.

Für die eigentliche Bearbeitung muss sichergestellt werden, dass ausschließlich über die Verbindung zwischen dem Werkzeughalter der Spindeleinheit und einem diesem zugeordneten Kegelabschnitt ein Kraftschluss oder Formschluss zum Antrieb des Werkzeugs gegeben ist. Eine andere formschlüssige oder kraftschlüssige Verbindung zwischen der Werkzeugeinheit und dem Spindelgehäuse der Werkzeugspindel wäre nachteilig.

Die Schritte S104, S106 und S108 beschreiben Maßnahmen, die den gewünschten Zustand gewährleisten. Die Maßnahmen können alternativ oder kombiniert implementiert sein. In einem Schritt S104 wird sichergestellt, dass die Betätigungshülse in der Entlastungsstellung ist. Auf diese Weise wird der Spannabschnitt der Spannkappe nicht in Richtung auf den Abdecktopf ausgelenkt, so dass dort kein Kraftschluss oder Formschluss erzeugt wird. In einem Schritt S106 ist es unerheblich, ob die Betätigungshülse in der Entlastungsstellung oder der Spannstellung ist, weil in beiden Stellungen ein Spalt zwischen dem Abdecktopf und der Spannkappe verbleibt, der eine Relativrotation zwischen dem Abdecktopf und dem Spindelgehäuse erlaubt. In einem Schritt S108 kann der Abdecktopf durch die Betätigungshülse und die Spannkappe formschlüssig oder kraftschlüssig am Spindelgehäuse festgelegt werden, es ist jedoch konstruktiv eine Relativrotation zwischen dem Abdecktopf und der Basis der Werkzeugeinheit ermöglicht, so dass die Basis der Werkzeugeinheit mitsamt dem aufgenommenen Werkzeug durch die Spindeleinheit antreibbar und relativ zum festgesetzten Abdecktopf rotierbar ist.

Es kann sich ein Schritt 110 anschließen, in dem die Spindeleinheit angetrieben wird, um das Werkzeug der Werkzeugeinheit anzutreiben. Infolgedessen ist in einem weiteren Schritt S112 eine Werkstückbearbeitung mit dem angetriebenen Werkzeug ermöglicht.

Es versteht sich, dass die in den Figuren 12-14 veranschaulichten Verfahren bei ein und derselben Werkzeugmaschine mit ein und derselben Werkzeugspindel zur Anwendung kommen können, wenn unterschiedliche Werkzeugeinheiten montiert und betrieben werden.

## Patentansprüche

1. Werkzeugspindel (60, 560), insbesondere stehende Werkzeugspindel (60, 560), für eine Werkzeugmaschine (10) zur Aufnahme einer Werkzeugeinheit (110, 210, 310, 410), wobei die Werkzeugspindel (60, 560) Folgendes aufweist:
- ein Spindelgehäuse (90, 590),
- eine im Spindelgehäuse (90, 590) gelagerte und durch einen Antrieb (100, 600) um eine Längsachse (94, 594) drehbare Spindeleinheit (92, 592), die einen Werkzeughalter (62, 562) mit einer Werkzeugaufnahme (136, 636) zur Aufnahme einer Werkzeugeinheit (110, 210, 310, 410) aufweist, **gekennzeichnet durch**
- eine am Spindelgehäuse (90, 590) befestigte Spannkappe (96, 596) mit einem auslenkbaren Spannabschnitt (150) zur Klemmung einer aufgenommenen Werkzeugeinheit (110, 210, 310, 410), und
- eine entlang der Längsachse (94, 594) zwischen einer Entlastungsstellung und einer Spannstellung verfahrbare Betätigungshülse (134),
wobei die Betätigungshülse (134) einen Betätigungsabschnitt (142) aufweist, der zumindest in der Spannstellung auf den Spannabschnitt (150) einwirkt und diesen auslenkt.

2. Werkzeugspindel (60, 560) nach Anspruch 1, wobei die Betätigungshülse (134) einen Kolben (140), insbesondere einen Ringkolben, umfasst.

3. Werkzeugspindel (60, 560) nach Anspruch 1 oder 2, wobei sich die Spindeleinheit (92, 592) durch die Betätigungshülse (134) erstreckt.

4. Werkzeugspindel (60, 560) nach einem der Ansprüche 1-3, wobei die Betätigungshülse (134) verschieblich aber drehfest am Spindelgehäuse (90, 590) gelagert ist.

5. Werkzeugspindel (60, 560) nach einem der Ansprüche 1-4, wobei der Betätigungsabschnitt (142) konisch gestaltet ist und bei der Bewegung von der Entlastungsstellung in die Spannstellung den auslenkbaren Spannabschnitt (150) nach außen drängt, und/oder wobei die Spannkappe (96, 596) beim auslenkbaren Spannabschnitt (150) geschlitzt ist.

6. Werkzeugspindel (60, 560) nach einem der Ansprüche 1-5, wobei ein Verdrängungsraum (166) für die Betätigungshülse (134) bereitgestellt ist, der insbesondere zumindest abschnittsweise durch die Spannkappe (96, 596) gebildet ist.

7. Werkzeugspindel (60, 560) nach einem der Ansprüche 1-6, wobei die Werkzeugaufnahme (136, 636) eine Hohlschaftkegel-Spanneinheit (98) aufweist, und insbesondere wobei die Spindeleinheit (92, 592) zur drehfesten Aufnahme eines Hohlschaftkegels (278) ausgebildet ist, wobei der Spannabschnitt (150) zusätzlich zur Klemmung eines werkzeugseitigen Klemmabschnitts (174, 274, 374, 474) ausgebildet ist.

8. Werkzeugspindel (60, 560) nach einem der Ansprüche 1-7, wobei die Werkzeugaufnahme (136, 636) mit einer Werkzeugeinheit (210, 410) mit feststehendem Werkzeug (216, 416) bestückt ist, wobei der Spannabschnitt (150) in der Spannstellung die Werkzeugeinheit (210, 410) klemmt, und insbesondere wobei die Werkzeugeinheit (210, 410) in der Entlastungsstellung durch die Spindeleinheit (92, 592) für Positionierzwecke rotierbar ist.

9. Werkzeugspindel (60, 560) nach einem der Ansprüche 1-8, wobei die Werkzeugaufnahme (136, 636) mit einer Werkzeugeinheit (110, 310) mit rotierbarem Werkzeug (116, 316) bestückt ist.

10. Werkzeugspindel (60, 560) nach Anspruch 9, wobei die Betätigungshülse (134) bei der Bearbeitung mit der Werkzeugeinheit (110, 310) in der Entlastungsstellung verbleibt, und/oder wobei eine Bewegung der Betätigungshülse (134) in die Spannstellung nicht zu einer Klemmung der Werkzeugeinheit (110, 310) führt.

11. Werkzeugspindel (60, 560) nach einem der Ansprüche 1-7, wobei die Werkzeugaufnahme (136, 636) mit einer Werkzeugeinheit (110) mit einem Winkelkopf (112) bestückt ist, der zur Aufnahme eines rotierbaren Werkzeugs (116) ausgebildet ist.

12. Werkzeugspindel (60, 560) nach Anspruch 11, wobei in der Spannstellung ein Kopfgehäuse (114) des Winkelkopfes (112) am Spindelgehäuse (90, 590) festgelegt ist und das Werkzeug (116) im Winkelkopf (112) über die Spindeleinheit (92, 592) antreibbar ist, und/oder wobei in der Entlastungsstellung ein Kopfgehäuse (114) des Winkelkopfes (112) zur Drehmitnahme mit einer Basis (124) des Winkelkopfes (112) gekoppelt und gemeinsam mit der Basis (124) durch die Spindeleinheit (92, 592) relativ zum Spindelgehäuse (90, 590) zu Positionierzwecken rotierbar ist.

13. Werkzeugeinheit (110, 210, 310, 410) zur Aufnahme an einer Werkzeugspindel (60, 560) nach einem der Ansprüche 1-12, wobei die Werkzeugeinheit (110, 210, 310, 410) Folgendes aufweist:
- eine Basis (124, 224, 324, 424),
- einen Kegelabschnitt (118, 218, 318, 418), der in konzentrischer Ausrichtung an einer Werkzeugspindel (60, 560) aufnehmbar ist, die eine Längsachse (94, 594) definiert,
- ein von der Basis (124, 224, 324, 424) gehaltenes Werkzeug (116, 216, 316, 416), wobei die Basis (124, 224, 324, 424) zwischen dem Kegelabschnitt (118, 218, 318, 418) und dem Werkzeug (116, 216, 316, 416) angeordnet ist, und
- einen mit der Basis (124, 224, 324, 424) gekoppelten Abdecktopf (120, 220, 320, 420), der die Basis (124, 224, 324, 424) zumindest abschnittsweise umgibt,
wobei der Abdecktopf (120, 220, 320, 420) einen der Werkzeugspindel (60, 560) zugewandten Rand (170, 270, 370, 470) aufweist, der sich in Richtung auf den Kegelabschnitt (118, 218, 318, 418) erstreckt und diesen zumindest abschnittsweise umgibt, und
wobei der Rand (170, 270, 370, 470) einen Klemmabschnitt (174, 274, 374, 474) aufweist, der mit dem Spannabschnitt (150) der Spannkappe (96, 596) der Werkzeugspindel (60, 560) kontaktierbar ist.

14. Werkzeugmaschine (10), die Folgendes aufweist:
- zumindest eine um eine horizontal orientierte Längsachse (24) antreibbare Werkstückspindel (20, 30) mit einem Werkstückhalter (22, 32),
- eine primäre Werkzeugspindel (40) mit einem Werkzeughalter (42), wobei die primäre Werkzeugspindel (40) in zwei oder mehr translatorischen Achsen (44, 46, 48) relativ zur Werkstückspindel (20, 30) verfahrbar ist, und
- eine gemäß einem der Ansprüche 1-12 gestaltete sekundäre Werkzeugspindel (60, 560), wobei die die sekundäre Werkzeugspindel (60, 560) in zwei oder mehr translatorischen Achsen (80, 82, 84) relativ zur Werkstückspindel (20, 30) verfahrbar ist,
wobei die primäre Werkzeugspindel (40) in zumindest einer Betriebsstellung vertikal orientiert und als hängende Werkzeugspindel (40) gestaltet ist, und
wobei die sekundäre Werkzeugspindel (60, 560) in zumindest einer Betriebsstellung vertikal orientiert und als stehende Werkzeugspindel (60, 560) gestaltet ist.

15. Verfahren zum Betrieb einer Werkzeugmaschine gemäß Anspruch 14, mit den folgenden Schritten:
- Bereitstellung einer Werkzeugeinheit (110, 210, 310, 410) und Aufnahme derselben am Werkzeughalter (62, 562) einer gemäß einem der Ansprüche 1-12 gestalteten Werkzeugspindel (60, 560),
- falls erforderlich, Verfahren der Betätigungshülse (134) in die Entlastungsstellung,
- Betreiben der Spindeleinheit (92, 592) der sekundären Werkzeugspindel (60, 560), um die Werkzeugeinheit (110, 210, 310, 410) in einer definierten Rotationsposition in Bezug auf die Längsachse (94, 594) zu positionieren,
- Verfahren der Betätigungshülse (134) in die Spannstellung, um mit der Spannkappe (96, 596) die Werkzeugeinheit (110, 210, 310, 410) in der Rotationsposition zu klemmen, und
- im Falle eines über die Spindeleinheit (92, 592) angetriebenen Werkzeugs (116, 316), Antreiben der Spindeleinheit (92, 592) zur Rotation des Werkzeugs (116, 316), um ein Werkstück zu bearbeiten.

## Claims

1. A tool spindle (60, 560), in particular a standing tool spindle (60, 560), for a machine tool (10) for receiving a tool unit (110, 210, 310, 410), wherein the tool spindle (60, 560) comprises:
- a spindle housing (90, 590),
- a spindle unit (92, 592) mounted in the spindle housing (90, 590) and rotatable about a longitudinal axis (94, 594) by a drive (100, 600), the spindle unit (92, 592) comprising a tool holder (62, 562) with a tool receptacle (136, 636) for receiving a tool unit (110, 210, 310, 410),
**characterized by**
- a clamping cap (96, 596) attached to the spindle housing (90, 590) and having a deflectable clamping section (150) for clamping a tool unit (110, 210, 310, 410) received therein, and
- an actuating sleeve (134) movable along the longitudinal axis (94, 594) between a release position and a clamping position,
wherein the actuating sleeve (134) has an actuating section (142) which, at least in the clamping position, acts on the clamping section (150) and deflects it.

2. The tool spindle (60, 560) according to claim 1, wherein the actuating sleeve (134) comprises a piston (140), in particular a ring piston.

3. The tool spindle (60, 560) according to claim 1 or 2, wherein the spindle unit (92, 592) extends through the actuating sleeve (134).

4. The tool spindle (60, 560) according to any one of claims 1-3, wherein the actuating sleeve (134) is mounted on the spindle housing (90, 590) so as to be displaceable but not rotatable.

5. The tool spindle (60, 560) according to any one of claims 1-4, wherein the actuating section (142) is conically shaped and, when moving from the release position to the clamping position, pushes the deflectable clamping section (150) outwards, and/or wherein the clamping cap (96, 596) is slotted at the deflectable clamping section (150).

6. The tool spindle (60, 560) according to any one of claims 1-5, wherein a displacement space (166) is provided for the actuating sleeve (134), which is in particular at least sectionally formed by the clamping cap (96, 596).

7. The tool spindle (60, 560) according to any one of claims 1-6, wherein the tool receptacle (136, 636) has a hollow shank taper clamping unit (98), and in particular wherein the spindle unit (92, 592) is arranged for a rotationally fixed support of a hollow shaft taper (278), wherein the clamping section (150) is additionally arranged for clamping a tool-side clamping section (174, 274, 374, 474).

8. The tool spindle (60, 560) according to any one of claims 1-7, wherein the tool receptacle (136, 636) is equipped with a tool unit (210, 410) with a fixed tool (216, 416), wherein the clamping section (150), in the clamping position, clamps the tool unit (210, 410), and in particular wherein the tool unit (210, 410) is rotatable in the release position by the spindle unit (92, 592) for positioning purposes.

9. The tool spindle (60, 560) according to any one of claims 1-8, wherein the tool receptacle (136, 636) is equipped with a tool unit (110, 310) with a rotatable tool (116, 316).

10. The tool spindle (60, 560) according to claim 9, wherein the actuating sleeve (134) remains in the release position during machining with the tool unit (110, 310), and/or wherein a movement of the actuating sleeve (134) into the clamping position does not lead to the tool unit (110, 310) being clamped.

11. The tool spindle (60, 560) according to any one of claims 1-7, wherein the tool receptacle (136, 636) is equipped with a tool unit (110) with an angle head (112) which is configured to hold a rotatable tool (116).

12. The tool spindle (60, 560) according to claim 11, wherein, in the clamping position, a head housing (114) of the angle head (112) is fixed to the spindle housing (90, 590) and the tool (116) in the angle head (112) can be driven via the spindle unit (92, 592), and/or wherein, in the release position, a head housing (114) of the angle head (112) is coupled to a base (124) of the angle head (112) for rotary engagement and, together with the base (124), is rotatable by the spindle unit (92, 592) relative to the spindle housing (90, 590) for positioning purposes.

13. A tool unit (110, 210, 310, 410) for mounting on a tool spindle (60, 560) according to any one of claims 1-12, wherein the tool unit (110, 210, 310, 410) comprises:
- a base (124, 224, 324, 424),
- a tapered section (118, 218, 318, 418) which can be received in concentric alignment on a tool spindle (60, 560) defining a longitudinal axis (94, 594),
- a tool (116, 216, 316, 416) held by the base (124, 224, 324, 424),
wherein the base (124, 224, 324, 424) is arranged between the tapered section (118, 218, 318, 418) and the tool (116, 216, 316, 416), and
- a cover pot (120, 220, 320, 420) coupled to the base (124, 224, 324, 424), which at least partially surrounds the base (124, 224, 324, 424),
wherein the cover pot (120, 220, 320, 420) has a rim (170, 270, 370, 470) facing the tool spindle (60, 560), which extends in the direction towards the tapered section (118, 218, 318, 418) and at least partially surrounds it, and
wherein the rim (170, 270, 370, 470) comprises a clamping section (174, 274, 374, 474) which can be brought into contact with the clamping section (150) of the clamping cap (96, 596) of the tool spindle (60, 560).

14. A machine tool (10) comprising:
- at least one workpiece spindle (20, 30) that is drivable about a horizontally oriented longitudinal axis (24) and having a workpiece holder (22, 32),
- a primary tool spindle (40) with a tool holder (42), wherein the primary tool spindle (40) is movable in two or more translational axes (44, 46, 48) relative to the workpiece spindle (20, 30), and
- a secondary tool spindle (60, 560) arranged in accordance with any one of claims 1-12, wherein the secondary tool spindle (60, 560) is movable in two or more translational axes (80, 82, 84) relative to the workpiece spindle (20, 30),
wherein the primary tool spindle (40) is vertically oriented in at least one operating position and is arranged as a suspended tool spindle (40), and
wherein the secondary tool spindle (60, 560) is oriented vertically in at least one operating position and is arranged as a standing tool spindle (60, 560).

15. A method for operating a machine tool (10) according to claim 14, comprising the following steps:
- providing a tool unit (110, 210, 310, 410) and mounting it on the tool holder (62, 562) of a tool spindle (60, 560) arranged in accordance with any one of claims 1-12.
- if necessary, moving the actuating sleeve (134) into the release position,
- operating the spindle unit (92, 592) of the secondary tool spindle (60, 560) in order to position the tool unit (110, 210, 310, 410) in a defined rotational position with respect to the longitudinal axis (94, 594),
- moving the actuating sleeve (134) into the clamping position in order to clamp the tool unit (110, 210, 310, 410) with the clamping cap (96, 596) in the rotational position, and
- in the case of a tool (116, 316) driven by the spindle unit (92, 592), driving the spindle unit (92, 592) to rotate the tool (116, 316) in order to machine a workpiece.

## Revendications

1. Broche porte-outil (60, 560), en particulier broche porte-outil verticale (60, 560), pour une machine-outil (10) destinée à recevoir une unité à outil (110, 210, 310, 410), dans laquelle la broche porte-outil (60, 560) présente les éléments suivants :
- un boîtier de broche (90, 590),
- une unité de broche (92, 592) montée dans le boîtier de broche (90, 590) et pouvant tourner autour d'un axe longitudinal (94, 594) au moyen d'un entraînement (100, 600), laquelle unité de broche présente un support pour outil (62, 562) comportant un logement pour outil (136, 636) pour la réception d'une unité à outil (110, 210, 310, 410), **caractérisée par**
- un capuchon de serrage (96, 596) fixé au boîtier de broche (90, 590) et comportant une section de serrage (150) pouvant être déviée pour le serrage d'une unité à outil (110, 210, 310, 410) reçue, et
- une douille d'actionnement (134) pouvant être déplacée le long de l'axe longitudinal (94, 594) entre une position de décharge et une position de serrage,
dans laquelle la douille d'actionnement (134) présente une section d'actionnement (142) qui, au moins dans la position de serrage, agit sur la section de serrage (150) et la fait dévier.

2. Broche porte-outil (60, 560) selon la revendication 1, dans laquelle la douille d'actionnement (134) comprend un piston (140), en particulier un piston annulaire.

3. Broche porte-outil (60, 560) selon la revendication 1 ou 2, dans laquelle l'unité de broche (92, 592) s'étend à travers la douille d'actionnement (134).

4. Broche porte-outil (60, 560) selon l'une des revendications 1 à 3, dans laquelle la douille d'actionnement (134) est montée de manière à pouvoir coulisser mais en étant fixe en rotation sur le boîtier de broche (90, 590).

5. Broche porte-outil (60, 560) selon l'une des revendications 1 à 4, dans laquelle la section d'actionnement (142) est de forme conique et pousse la section de serrage (150) pouvant être déviée vers l'extérieur lors du déplacement de la position de décharge à de la position de serrage, et/ou dans laquelle le capuchon de serrage (96, 596) est fendu au niveau de la section de serrage (150) pouvant être déviée.

6. Broche porte-outil (60, 560) selon l'une des revendications 1 à 5, dans laquelle un espace de mouvement (166) est prévu pour la douille d'actionnement (134), lequel est en particulier formé par le capuchon de serrage (96, 596), au moins dans certaines sections.

7. Broche porte-outil (60, 560) selon l'une des revendications 1 à 6, dans laquelle le logement pour outil (136, 636) présente une unité de serrage à cône à tige creuse (98), et en particulier dans laquelle l'unité de broche (92, 592) est conçue pour la réception de manière fixe en rotation d'un cône à tige creuse (278), dans laquelle la section de serrage (150) est en outre conçue pour le serrage d'une section de serrage (174, 274, 374, 474) côté outil.

8. Broche porte-outil (60, 560) selon l'une des revendications 1 à 7, dans laquelle le logement pour outil (136, 636) est équipé d'une unité à outil (210, 410) comportant un outil fixe (216, 416), dans laquelle la section de serrage (150) serre l'unité à outil (210, 410) dans la position de serrage, et en particulier dans laquelle l'unité à outil (210, 410) peut tourner dans la position de décharge au moyen de l'unité de broche (92, 592) à des fins de positionnement.

9. Broche porte-outil (60, 560) selon l'une des revendications 1 à 8, dans laquelle le logement pour outil (136, 636) est équipé d'une unité à outil (110, 310) comportant un outil rotatif (116, 316).

10. Broche porte-outil (60, 560) selon la revendication 9, dans laquelle la douille d'actionnement (134) reste dans la position de décharge lors de l'usinage avec l'unité à outil (110, 310), et/ou dans laquelle un mouvement de la douille d'actionnement (134) dans la position de serrage ne conduit pas à un serrage de l'unité à outil (110, 310).

11. Broche porte-outil (60, 560) selon l'une des revendications 1 à 7, dans laquelle le logement pour outil (136, 636) est équipé d'une unité à outil (110) comportant une tête angulaire (112) qui est conçue pour la réception d'un outil rotatif (116).

12. Broche porte-outil (60, 560) selon la revendication 11, dans laquelle, dans la position de serrage, un boîtier de tête (114) de la tête angulaire (112) est fixé au boîtier de broche (90, 590) et l'outil (116) peut être entraîné dans la tête angulaire (112) par l'intermédiaire de l'unité de broche (92, 592), et/ou dans laquelle, dans la position de décharge, un boîtier de tête (114) de la tête angulaire (112) est accouplé à une base (124) de la tête angulaire (112) pour l'entraînement en rotation et peut tourner conjointement avec la base (124) par rapport au boîtier de broche (90, 590) au moyen de l'unité de broche (92, 592) à des fins de positionnement.

13. Unité à outil (110, 210, 310, 410) destinée à être reçue sur une broche porte-outil (60, 560) selon l'une des revendications 1 à 12, dans laquelle l'unité à outil (110, 210, 310, 410) présente les éléments suivants :
- une base (124, 224, 324, 424),
- une section conique (118, 218, 318, 418) pouvant être reçue en alignement concentrique sur une broche porte-outil (60, 560) définissant un axe longitudinal (94, 594),
- un outil (116, 216, 316, 416) maintenu par la base (124, 224, 324, 424), dans laquelle la base (124, 224, 324, 424) est disposée entre la section conique (118, 218, 318, 418) et l'outil (116, 216, 316, 416), et
- un couvercle de recouvrement (120, 220, 320, 420) accouplé à la base (124, 224, 324, 424) et entourant la base (124, 224, 324, 424) au moins dans certaines sections,
dans laquelle le couvercle de recouvrement (120, 220, 320, 420) présente un bord (170, 270, 370, 470) tourné vers la broche porte-outil (60, 560), lequel bord s'étend en direction de la section conique (118, 218, 318, 418) et entoure celle-ci au moins dans certaines sections, et
dans laquelle le bord (170, 270, 370, 470) présente une section de serrage (174, 274, 374, 474) qui peut être mise en contact avec la section de serrage (150) du capuchon de serrage (96, 596) de la broche porte-outil (60, 560).

14. Machine-outil (10), présentant les éléments suivants :
- au moins une broche porte-pièce (20, 30) pouvant être entraînée autour d'un axe longitudinal (24) orienté horizontalement et comportant un support pour pièce (22, 32),
- une broche porte-outil primaire (40) comportant un support pour outil (42), dans laquelle la broche porte-outil primaire (40) peut être déplacée selon deux axes de translation (44, 46, 48) ou plus par rapport à la broche porte-pièce (20, 30), et
- une broche porte-outil secondaire (60, 560) conçue selon l'une des revendications 1 à 12, dans laquelle la broche porte-outil secondaire (60, 560) peut être déplacée selon deux axes de translation (80, 82, 84) ou plus par rapport à la broche porte-pièce (20, 30),
dans laquelle la broche porte-outil primaire (40) est orientée verticalement dans au moins une position de fonctionnement et est conçue comme une broche porte-outil suspendue (40), et
dans laquelle la broche porte-outil secondaire (60, 560) est orientée verticalement dans au moins une position de fonctionnement et est conçue comme une broche porte-outil verticale (60, 560).

15. Procédé permettant de faire fonctionner une machine-outil selon la revendication 14, comportant les étapes suivantes :
- fourniture d'une unité à outil (110, 210, 310, 410) et réception de celle-ci sur le support pour outil (62, 562) d'une broche porte-outil (60, 560) conçue selon l'une des revendications 1 à 12,
- si nécessaire, déplacement de la douille d'actionnement (134) dans la position de décharge,
- fonctionnement de l'unité de broche (92, 592) de la broche porte-outil secondaire (60, 560) afin de positionner l'unité à outil (110, 210, 310, 410) dans une position de rotation définie par rapport à l'axe longitudinal (94, 594),
- déplacement de la douille d'actionnement (134) dans la position de serrage afin de serrer l'unité à outil (110, 210, 310, 410) dans la position de rotation avec le capuchon de serrage (96, 596), et
- dans le cas d'un outil (116, 316) entraîné par l'intermédiaire de l'unité de broche (92, 592), entraînement de l'unité de broche (92, 592) pour faire tourner l'outil (116, 316) afin d'usiner une pièce.
